(19) Europäisches Patentamt
European Patent Office
Office européen des brevets

(11) EP 1 510 542 A1

(12) EUROPEAN PATENT APPLICATION
published in accordance with Art. 158(3) EPC

(43) Date of publication:
02.03.2005 Bulletin 2005/09

(21) Application number: 03733132.9

(22) Date of filing: 28.05.2003

(51) Int Cl.[7]: C08J 9/04

(86) International application number:
PCT/JP2003/006681

(87) International publication number:
WO 2003/102062 (11.12.2003 Gazette 2003/50)

(84) Designated Contracting States:
DE FR GB

(30) Priority: 31.05.2002 JP 2002158404

(71) Applicant: Mitsui Chemicals, Inc.
Tokyo 105-7117 (JP)

(72) Inventors:
- HOMMA, Kiyoshi; c/o MITSUI CHEMICALS, INC.
Ichihara-shi, Chiba 299-0108 (JP)
- SAKAMAKI, Noboru;
c/o MITSUI CHEMICALS, INC.
Ichihara-shi, Chiba 299-0108 (JP)
- HIRAOKA, Kunihide;
c/o MITSUI CHEMICALS, INC.
Ichihara-shi, Chiba 299-0108 (JP)
- ISAKI, Takeharu; c/o MITSUI CHEMICALS, INC.
Sodegaura-shi, Chiba 299-0265 (JP)
- SHIODE, Hirohisa; c/o MITSUI CHEMICALS, INC.
Sodegaura-shi, Chiba 299-0265 (JP)
- SUGIHARA, Eiichi; c/o MITSUI CHEMICALS, INC.
Sodegaura-shi, Chiba 299-0265 (JP)

(74) Representative: Cresswell, Thomas Anthony
J.A. KEMP & CO.
14 South Square
Gray's Inn
London WC1R 5JJ (GB)

# (54) OLEFIN-BASE THERMOPLASTIC ELASTOMER FOAM AND OLEFIN-BASE THERMOPLASTIC ELASTOMER COMPOSITION FOR THE FORM

(57) An olefinic thermoplastic elastomer foam of the present invention has a density of less than 700 kg/m$^3$, a compression set of less than 60% and a density of elastically effective chains ν of preferably $3.0\times10^{-5}$ to $2.0\times10^{-4}$ (mol/cm$^3$). An olefinic thermoplastic elastomer composition for preparing the above foam has an equilibrium creep compliance $J_e^0$ of $1.0\times10^{-6}$ to $5.0\times10^{-4}$ (Pa$^{-1}$) and contains a crosslinked olefin rubber and an olefin plastic in a specific proportion. The olefinic thermoplastic elastomer composition can be prepared by melt kneading a specific crosslinked olefinic thermoplastic elastomer and a specific olefin plastic.

The olefinic thermoplastic elastomer composition is preferably foamed by at least one foaming agent selected from an organic or inorganic thermally decomposable foaming agent, carbon dioxide and nitrogen, together with a specific foaming auxiliary such as citric acid.

The olefinic thermoplastic elastomer foam is particularly suitable to use as an automotive sponge weatherstrip, a clearance-filling foamed sheet, a building sash sponge seal, a pipe-joint sponge seal, a protect sponge or a thermal insulating sponge tube.

The olefinic thermoplastic elastomer composition according to the invention can provide the foams which have no surface roughness, a low density and a low compression set, preferably a good appearance and a kink resistance. The olefinic thermoplastic elastomer foams can be used as substitutes for vulcanized rubbers.



Printed by Jouve, 75001 PARIS (FR)

## Description

### FIELD OF THE INVENTION

The present invention relates to an olefinic thermoplastic elastomer foam which is flexible and has a low compression set, and an olefinic thermoplastic elastomer composition for preparing the same.

### BACKGROUND OF THE INVENTION

It is known that a process for producing elastomer foam products comprises:

kneading a natural or synthetic rubber together with a reinforcing agent, a filler, a softener, etc. in an internal kneader at 120 to 180°C for 3 to 15 minutes,
cooling the resultant kneaded mixture to almost room temperature and thereafter kneading it together with a vulcanizing agent, a vulcanization accelerator and a foaming agent by use of a mixing mill or an internal kneader at 40 to 100°C so that any scorch will not take place, and
molding the resultant foamable kneaded mixture into a desired shape and heating it to simultaneously effect vulcanization and foaming. Examples of elastomer foam products produced by the above process include automotive sponge weatherstrips, clearance-filling foamed sheets, building sash sponge seals, pipe-joint sponge seals, protect sponges and thermal insulating sponge tubes.

However, the above process is disadvantage because of its industrial production problems that many labor hours are taken until the foamable kneaded mixture is obtained, large amounts of energy are necessary for the vulcanization and foaming which should be carried out at 150 to 300°C for 5 to 30 minutes, and the vulcanization produces harmful gases, such as SOx, and further due to its environmental problems, for example that the obtained foam products are difficult to recycle since they comprise a vulcanized rubber.

In order to solve these problems, it is known to employ a flexible olefin plastic, such as a thermoplastic resin (e.g., ethylene/vinyl acetate copolymers and low density polyethylenes). The above kneading and vulcanization may be able to be omitted by employing the flexible olefin plastic. However, the flexible olefin plastics are generally inferior to rubbers in flexibility and compression set resistance, are significantly limited in the use of obtainable foam products, and cannot substitute vulcanized rubbers.

On the other hand, JP-A-48(1973)/26838 and JP-A-54(1979)/112967 disclose that partially crosslinked compositions comprising an olefin copolymer rubber and an olefin plastic can be used as thermoplastic elastomers having intermediate properties between the soft olefin plastics and vulcanized rubbers.

However, these thermoplastic elastomers have a problem that the olefin plastic component is decomposed by dynamic thermal treatment in the presence of an organic peroxide. As a result, these thermoplastic elastomers have a poor melt tension and are easily degassed. Therefore, even if foams are obtained therefrom, they have with an expansion ratio of only about 1.5 times and a problem of noticeably pulled surface due to the degassing.

JP-A-6(1994)/73222 discloses a method for foaming a thermoplastic elastomer composition comprising a mixture of a crystalline polyolefin plastic and a rubber with the use of water.

However, this method has a problem that the foaming is possible only within a very small temperature range and involves an special foaming extruder. Further, when the thermoplastic elastomer composition has been entirely crosslinked by phenol, the appearance of an extruded foam is extremely bad. Moreover, when the thermoplastic elastomer composition has been partially crosslinked or uncrosslinked, the compression set of a produced foam is large. Therefore, these thermoplastic elastomer foams cannot versatilely substitute vulcanized rubbers.

In general, the forming mechanism of thermoplastic resin foams are largely classified into the following four steps as described in Seikei-kakou, Vo. 12, No. 11, P.706 (2000): (1) cell nucleation, (2) cell growth, (3) maintaining of cells during solidification of resin and (4) stabilization of foam shape. In order to obtain foams with high expansion ratios, the following technical problems have to be solved.

The first is a "thinning of cell membrane" problem of how to make cell membranes (cell walls) thin in the course of growing the cells. The second is a "maintaining of cells during solidification of resin" problem of how to maintain the cell with flowable thin membranes until the resin is solidified. The third is a "stabilization of foam shape" problem of how to stabilize the shape (size) of foam against entrance and exit of gas.

Among the above three problems, the "thinning of cell membrane" problem is thought to be related particularly to the elongational viscosity.

With such problems, JP Patent No. 2521388 discloses a polypropylene foam sheet characterized by specified molecular weight $M_z$, molecular weight distribution $M_z/M_w$, equilibrium creep compliance $J_e^0$ and recoverable shear strain.

In the above invention, the equilibrium creep compliance $J_e^0$ should be at least $1.2\times10^{-3}$ $Pa^{-1}$ in order to obtain a homogenous cell structure and surface smoothness.

Further, JP-A-10 (1998) /195219 discloses a polypropylene resin extruded foam which has specified elongational viscosity, equilibrium creep compliance, density and closed cell ratio.

The above publication discloses that polypropylene resins whose elongational viscosity rapidly increases with increase of strain and whose equilibrium creep compliance is less than $1.2\times10^{-3}$ $Pa^{-1}$, have good foaming properties and provide extruded foams which are thick but have a low density and homogenous fine cells. However, the Comparative Examples in the publication show that polypropylene resins whose elongational viscosity does not increase rapidly with increase of strain have bad foaming properties even if the equilibrium creep compliance thereof is less than $1.2\times10^{-3}$ $Pa^{-1}$.

As mentioned above, polypropylene resins can provide satisfactory foam products irrespective of whether the equilibrium creep compliance thereof is not less than or less than $1.2\times10^{-3}$ $Pa^{-1}$. Accordingly, it can be assumed that the equilibrium creep compliance is substantially unrelated to the foaming properties of polypropylene resins.

Unlike with the above polypropylene resin compositions, olefinic thermoplastic elastomer compositions have a structure that particles of crosslinked olefin copolymer rubber are dispersed in an olefin plastic. Those compositions with dispersed-particles structure have a problem that the cell membranes are easily broken upon foaming so that foams having low densities can be hardly obtained therefrom. In addition, it is a characteristic of the olefinic thermoplastic elastomer compositions that the cells which have expanded largely are shrunk by the elastomeric properties of the resin composition to make it difficult to obtain satisfactory low-density foams. As described above, it is the present state that no olefinic thermoplastic elastomer foams have been obtained with low densities.

Accordingly, olefinic thermoplastic elastomer foaming compositions which can be foamed with a versatile molding machine to provide foams that have an excellent appearance, a low density and a low compression set, and further foams obtained from the compositions are strongly desired.

In recent years, foams having the above properties are often required further to have finer cells from the viewpoint of kink prevention.

JP-A-09(1997)/143297 discloses a process of preparing foams by mixing an olefinic thermoplastic elastomer with an organic or inorganic thermally decomposable foaming agent. However, foams obtained by this process cannot have fine cells and therefore suffer kinks.

## OBJECT OF THE INVENTION

In order to solve the above problems related to the prior art, it is a first object of the invention to provide an excellent olefinic thermoplastic elastomer foam that has no surface roughness, a low density and a low compression set to be alternative to vulcanized rubbers, and a composition for producing the foam.

It is a second object of the invention to provide an olefinic thermoplastic elastomer foam that has a fine cell structure, a good appearance, a kink resistance, a low density and a low compression set, and a composition for producing the foam.

## DISCLOSURE OF THE INVENTION

As a result of a study in view of the above problems, the present inventors have found that the following means can achieve the objects of the invention and thereby completed the invention. The present invention concerns the following foams and olefinic thermoplastic elastomer compositions for preparing the foams.

(1) An olefinic thermoplastic elastomer foam having a density $\rho$ of less than 700 $kg/m^3$ and a compression set Cs of less than 60% measured after compressed to 50% thickness in a 70°C oven for 22 hours.

(2) The olefinic thermoplastic elastomer foam as specified in (1), wherein the density of elastically effective chains $\nu$ is from $3.0\times10^{-5}$ to $2.0\times10^{-4}$ ($mol/cm^3$).

(3) The olefinic thermoplastic elastomer foam as specified in (1), wherein the mean cell diameter is less than 300 μm.

(4) An olefinic thermoplastic elastomer composition for preparing the foam of (1), wherein the composition comprises an olefin plastic and a crosslinked olefin copolymer rubber and has an equilibrium creep compliance $J_e^0$ of $1.0\times10^{-6}$ to $5.0\times10^{-4}$ ($Pa^{-1}$).

(5) The olefinic thermoplastic elastomer composition as specified in (4), comprising the crosslinked olefin copolymer rubber in amounts of 40 to 90 parts by weight and the olefin plastic(s) in amounts of 10 to 60 parts by weight, based on 100 parts by weight of the total amount of the crosslinked olefin copolymer rubber and the olefin plastic(s).

(6) The olefinic thermoplastic elastomer composition as specified in (4), wherein the crosslinked olefin copolymer rubber is crosslinked by an organic peroxide.

(7) The olefinic thermoplastic elastomer composition as specified in (4), further comprising a softener in amounts of 0 to 150 parts by weight based on 100 parts by weight of the total amount of the crosslinked olefin copolymer rubber and the olefin plastic(s).

(8) The olefinic thermoplastic elastomer composition as specified in (4), further comprising a foaming auxiliary in amounts of 0.01 to 10 parts by weight based on 100 parts by weight of the total amount of the olefin plastic(s) and the crosslinked olefin copolymer rubber.

(9) The olefinic thermoplastic elastomer composition as specified in (4), which is obtained by melt kneading an olefinic thermoplastic elastomer (A) with an organic peroxide-uncrosslinkable olefin plastic (b), said olefinic thermoplastic elastomer (A) being obtained by dynamically heat treating an organic peroxide-uncrosslinkable olefin plastic (a) and an organic peroxide-crosslinkable olefin rubber in the presence of a crosslinking agent,

wherein the organic peroxide-uncrosslinkable olefin plastic (b) contains 5 to 40% by mass of polymer components with intrinsic viscosity [η] of at least 5 dl/g measured in decalin at 135°C, and has a melt tension of 2 to 20g and an MFR of 0.1 to 20 g/10 min measured at 230°C under 2.16kg load.

(10) The olefinic thermoplastic elastomer composition as specified in (9), comprising the organic peroxide-uncrosslinkable olefin plastic (b) in amounts of 1 to 40 parts by weight based on 100 parts by weight of the olefinic thermoplastic elastomer (A).

(11) An olefinic thermoplastic elastomer foam obtained by foaming the olefinic thermoplastic elastomer composition of (4) by at least one foaming agent selected from an organic or inorganic thermally decomposable foaming agent, carbon dioxide and nitrogen.

(12) An olefinic thermoplastic elastomer foam obtained by foaming the olefinic thermoplastic elastomer composition of (4) by a thermally decomposable foaming agent and a polyvalent carboxylic foaming auxiliary.

(13) The olefinic thermoplastic elastomer foam as specified in (1), which can be used as an automotive sponge weatherstrip, a clearance-filling foamed sheet, a building sash sponge seal, a pipe-joint sponge seal, a protect sponge or a thermal insulating sponge tube.

## BRIEF DESCRIPTION OF THE DRAWINGS

Fig. 1 is a conceptual graph showing a change in creep compliance with time since a sample is subjected to a constant stress.

Fig. 2 is a Maxwell model view.

Fig. 3 is a graph showing changes in cell internal pressure and cell diameter with time.

Fig. 4 is a graph showing a result of measurement of the creep compliance.

Fig. 5 is a general view showing how to calculate the equilibrium creep compliance.

Fig. 6 is a set of views showing how to measure the compression set (views A to E show exemplary cross sections of extruded foam, and the arrow indicates the compressing direction).

Fig. 7 is a set of schematic diagrams showing an extrusion foaming apparatus.

Fig. 8 is a schematic diagrams showing the figuration of discharge part of extruder die.

(Marks)

1. Carbon dioxide tank
2. Compression and supply device of carbon dioxide
3. Supply line of carbon dioxide
4. Extruder
5. Foaming thermoplastic elastomer
6. Water-jet cooling unit
7. Take-off rolls
8. Foam

## PREFERRED EMBODIMENTS OF THE INVENTION

The olefinic thermoplastic elastomer foaming composition and the foam thereof according to the invention will be described in detail hereinafter.

(Olefinic Thermoplastic Elastomer Foam)

The foam obtained from the olefinic thermoplastic elastomer composition of the invention desirably has a density of less than 700 kg/m$^3$, preferably less than 650 kg/m$^3$, and particularly preferably from 300 to 600 kg/m$^3$. When the density falls within the above range, the foam will be capable of sufficient flexibility, cushioning properties, lightweight properties, heat insulating properties, etc. and have high utility.

The lower limit of the above density is not specifically limited and can be determined in accordance with the objective use of the foam. For example, the foam can be readily produced in a density of 100 kg/m$^3$ or more.

The cell diameter of the foam is preferably less than 300 μm, and more preferably less than 200 μm in view of reducing kinks. The lower limit of the cell diameter is not specifically limited and can be determined in accordance with the objective use of the foam. For example, the foam can be readily produced with the cell diameter of 50 μm or more. The olefinic thermoplastic elastomer foam desirably has a compression set of less than 60%, and preferably less than 50%. When the compression set can fall within the above range, the foam can substitute vulcanized rubbers for most sealing purposes, such as automotive sponge weatherstrips, clearance-filling foamed sheets, building sash sponge seals, pipe-joint sponge seals, protect sponges and thermal insulating sponge tubes.

As illustrated in Fig. 6, the compression set of the foam is measured irrespective of the size of cross section and whether the cross section is hollow or filled in the following manner. A 3 cm-long specimen is stood on a flat and polished stainless steel plate on the basis of its flattest surface, and sandwiched with another parallel compression plate of such stainless steel. Thereafter the specimen is compressed to 50% thickness in a vertical direction to its basal surface and maintained in a 70°C oven for 22 hours in that state. Then the specimen is taken out of the oven and the compression is released. After the specimen is allowed to stand on a flat place for 30 minutes, the compression set is measured. When the compression has to be effected in a limited direction due to the shape of cross section, the specimen can be compressed in such a direction and measured for the compression set by the above procedure. The sectional figurations shown in Fig. 6 are just examples and the invention is not limited to those shapes.

The olefinic thermoplastic elastomer foam of the invention desirably has a density of elastically effective chains $\nu$ of $3.0\times10^{-5}$ to $2.0\times10^{-4}$ (mol/cm$^3$). The density of elastically effective chains of the foam is the same as that of the olefinic thermoplastic elastomer composition. Preferred ranges of the density of elastically effective chains and how to control or measure the density of elastically effective chains will be described later.

〈Olefinic Thermoplastic Elastomer Composition〉

The olefinic thermoplastic elastomer composition for preparing the above foam desirably has an equilibrium creep compliance $J_e^0$ of $1.0\times10^{-6}$ to $5.0\times10^{-4}$ (Pa$^{-1}$), preferably $1.0\times10^{-5}$ to $3.0\times10^{-4}$ (Pa$^{-1}$), and more preferably $1.0\times10^{-5}$ to $1.5\times10^{-4}$ (Pa$^{-1}$).

The equilibrium creep compliance $J_e^0$ will be discussed below.

The creep compliance J(t) (Pa$^{-1}$) is defined as the following formula (1) wherein $\sigma_0$ (Pa) is a constant stress applied to a sample and $\gamma$(t) is a strain measured.

$$J(t) = \gamma(t)/\sigma_0 \quad (1)$$

J(t) can be measured with a dynamic viscoelasticity measuring apparatus, such as a rotary rheometer or a stress rheometer, at a constant temperature (170°C in the invention) and under a constant stress $\sigma_0$ (1000 to 10000 Pa in the invention).

As shown in Fig. 1, plotting of creep compliances J(t) with elapsed time t(s) since a sample is subjected to a constant stress $\sigma_0$ gives a straight line in relation to the elapsed time t(s) after a sufficient time has passed.

The equilibrium creep compliance $J_e^0$ is given as an intercept in the following formula (2) when the straight line is extrapolated to the time t = 0 as shown in Fig. 1.

$$J(t) = J_e^0 + t/\eta \quad (2)$$

Next, equilibrium recovery compliance $J_r$ will be described.

When the constant stress $\sigma_0$ is released to 0 Pa after a certain time, the strain recovers due to the elastic behavior of resin. The compliance corresponding to the recovered strain is called the equilibrium recovery compliance $J_r$ as shown in Fig. 1.

The equilibrium creep compliance $J_e^0$ and the equilibrium recovery compliance $J_r$ are equal in homogenous resins as explained in RHEOLOGY-PRINCIPLES, MEASUREMENTS, AND APPLICATIONS by Christopher W. Macosko, pp. 119-121.

The correlations between the creep characteristics and foamability of the resin composition will be considered using a Maxwell model shown in Fig. 2, which consists of a spring and a dashpot connected in series. When a constant stress $\sigma_0$ is applied to a resin, the resin will be strained immediately after the stress $\sigma_0$ is given. This immediate strain is represented by the elastic movement of spring. And the resin will be further strained gradually with time. This gradual strain is expressed by the viscous movement of dashpot. Therefore, the equilibrium creep compliance $J_e^0$ represented by the immediate strain corresponds to the reciprocal number of the modulus of elasticity of the spring, and the slope of the straight line obtained by the over-time strain corresponds to the reciprocal number of the viscosity.

When the stress is released, the viscous strain of dashpot will remain but the elastic strain of spring will recover by the same extent as the first immediate strain.

In order to obtain favorable foams, cells have to be fine and dispersed homogenously. The internal pressure of cells is uniform and isotropic when a gas is still homogenously dissolved in the resin composition. However, once the cell nucleation occurs and the resulting cells (bubbles) grow, the cell internal pressure is lowered rapidly due to the drastic expansion of cell volume. Fig. 3 shows changes in cell internal pressure and cell diameter with time according to a numerical simulation. In the figure, white symbols indicate cell internal pressures and black symbols indicate cell diameters. Triangle symbols represent the values at $\eta = 1\times10^4$ Pa·s, square symbols represent the values when the viscosity $\eta= 1\times10^5$ Pa·s, and rhombic symbols represent the values at $\eta= 1\times10^6$ Pa·s.

The relational expressions used in the numerical simulation are the following:

Henry's Law:

$$P = KC$$

wherein P: pressure (Pa), K: solubility ($m^3$Pa/mol), C: gas concentration (mol/$m^3$)

Nucleation Velocity (Colton, J., Suh N. P. : Polym. Eng. Sci., 27, 7, 500 (1987)):

$$N_V = CF \ \exp\left(\frac{-\Delta G}{kT}\right), \quad \Delta G = \alpha \frac{\pi\gamma^3}{P^2}$$

wherein Nv: nucleation velocity (mol/$m^3$/s), $\Delta G$: free energy (J), $\gamma$: interfacial tension (N/m),$\alpha$: coefficient (-), F: contact probability (1/s), k: Boltzmann constant ($1.38\times10^{-23}$ J/K), T: absolute temperature (K)

Diffusion Equation (Fick's Law):

$$V_D=-DA\frac{\partial C}{\partial x}$$

wherein $V_D$: molecular diffusion rate (mol/s), D: diffusion coefficient ($m^2$/s), A: sectional area ($m^2$), x: distance (m) Cell Growth Process (Tserynyak):

$$\frac{dr}{dt}=\frac{Pr}{\eta}-\frac{\gamma}{2\eta}$$

wherein r: cell radius (m), t: time (s), $\eta$: viscosity (Pa·s) State Equation:

$$P = \frac{nRT}{V}, \ V = \frac{4}{3}\pi r^3$$

wherein R: gas constant (8.3144 J/(mol·K)), n: amount of gas in cell (mol), V: cell volume ($m^3$)

As illustrated in Fig. 3, the cell internal pressures are decreased rapidly in a short time whereas the cell diameters are increased rapidly.

If the resin composition has a high equilibrium creep compliance (as if the instantaneously strained spring has a low modulus of elasticity), it is strained greatly by an instantaneous high stress caused by the rapid change in internal pressure as explained above. That is, the cells enlarge so much that they become easily breakable. To obtain the foam with fine cells, the resin composition is required to have a low equilibrium creep compliance against the instantaneous high stress (as if the instantaneously strained spring has a high modulus of elasticity).

Once the resin composition is foamed, the cell internal pressure keeps balance with the viscoelastic force of resin, so that the cells are maintained as such until the resin is solidified by cooling. The resin composition having a high equilibrium recovery compliance can make a great recovery from the strain which has been caused greatly by the instantaneous stress. That is, the resin which constitutes the cell walls recovers from deformation when the gas temperature in the cells is lowered by cooling to cause volume reduction (pressure lowering) of cells, and the cells are caused to shrink greatly as a result.

If the resin composition has a low equilibrium recovery compliance, it is strained only a little by an instantaneous high stress. That is, the recovery of strain will be accordingly small when the gas pressure is lowered upon cooling. Therefore, the deformation of resin, i.e., the expanded cell walls, is recovered only slightly so that the cells are caused to shrink only a little. The foamability and creep characteristics have the above correlations in the foaming of the thermoplastic elastomer composition. Therefore, cell structure and foamability can be controlled utilizing the above correlations according to rheological characteristics.

For the purpose obtaining the flexible foam with good foamability, the olefinic thermoplastic elastomer foaming composition desirably comprises a crosslinked olefin copolymer rubber in amounts of 40 to 90 parts, preferably 50 to 85 parts, and more preferably 55 to 80 parts by weight, and an olefin plastic in amounts of 10 to 60 parts, preferably 15 to 50 parts, and more preferably 20 to 45 parts by weight, based on 100 parts by weight of the total amount of the crosslinked olefin copolymer rubber and the olefin plastic(s).

The crosslinked olefin copolymer rubber may be one that has been crosslinked by a phenolic crosslinking agent, and particularly preferably one that has been crosslinked by an organic peroxide.

In order that the olefinic thermoplastic elastomer foaming composition has an optimum equilibrium creep compliance, it is desirably prepared by dynamically heat treating an olefin copolymer rubber which can be crosslinked by an organic peroxide together with an olefin plastic which cannot be crosslinked by an organic peroxide, in the presence of an organic peroxide to effect crosslinking and decomposition by the organic peroxide, and further mixing the resultant elastomer with an organic peroxide-uncrosslinkable olefin plastic.

The organic peroxide-crosslinkable olefin copolymer rubber used in the olefinic thermoplastic elastomer foaming composition, is an amorphous and random elastomeric copolymer which comprises ethylene and an α-olefin of 3 to 20 carbon atoms or ethylene, an α-olefin of 3 to 20 carbon atoms and a non-conjugated polyene, and which can be crosslinked by being kneaded under heating together with an organic peroxide to reduce or lose its flowability. This olefin copolymer rubber can inhibit decomposition of the organic peroxide-uncrosslinkable olefin plastic at the time of dynamic crosslinking by an organic peroxide and plays important roles in imparting rubber elasticity to the foam and in lowering the compression set of the foam.

Examples of the olefin copolymer rubber include ethylene/α-olefin copolymer rubbers and ethylene/α-olefin/non-conjugated polyene copolymer rubbers. Of these, ethylene/α-olefin/non-conjugated polyene copolymer rubbers are preferred. The molar ratio (ethylene/α-olefin) of structural units derived from ethylene and from the α-olefin is desirably in the range of 55/45 to 85/15, and preferably 60/40 to 80/20.

Exemplary α-olefins are those of 3 to 20, preferably 3 to 10 carbon atoms, such as propylene, 1-butene, 4-methyl-1-pentene, 1-hexene and 1-octene. Of these, propylene and 1-butene are preferred.

The non-conjugated polyene for use in the above ethylene/α-olefin/non-conjugated polyene copolymer rubber is, for example, a cyclic or chain non-conjugated polyene. Examples of the cyclic non-conjugated polyene include 5-ethylidene-2-norbornene, dicyclopentadiene, 5-vinyl-2-norbornene, norbornadiene and methyltetrahydroindene. Examples of the chain non-conjugated polyene include 1,4-hexadiene, 7-methyl-1,6-octadiene, 8-methyl-4-ethylidene-1,7-nonadiene and 4-ethylidene-1,7-undecadiene. Of these non-conjugated polyenes, 5-ethylidene-2-norbornene, dicyclopentadiene and 5-vinyl-2-norbornene can be preferably used. The non-conjugated polyenes may be used either individually or in combination. The non-conjugated polyene is desirably copolymerized in amounts in terms of iodine value of 3 to 50, preferably 5 to 45, and more preferably 8 to 40. The iodine value is desirably more than 10 for the purposes of inhibiting decomposition of the organic peroxide-uncrosslinkable olefin plastic at the time of dynamic crosslinking, optimizing the equilibrium creep compliance to obtain good foamability, and increasing the density of elastically effective chains to improve the compression set.

The ethylene/α-olefin or ethylene/α-olefin/non-conjugated polyene copolymer rubber desirably has an intrinsic viscosity [η] of 0.8 to 6.0 dl/g, preferably 1.0 to 5.0 dl/g, and more preferably 1.1 to 4.0 dl/g, measured in decalin (decahydronaphthalene) at 135°C.

The ethylene/α-olefin or ethylene/α-olefin/non-conjugated polyene copolymer rubber with the above properties, can be prepared by the conventional method, which disclosed in, for example, POLYMER PRODUCTION PROCESS (published by Kogyo Chosakai Publishing Co., Ltd.) pp. 309-330.

The olefin plastic used in the olefinic thermoplastic elastomer foaming composition is preferably uncrosslinkable by an organic peroxide. Examples of the olefin plastic include olefin homopolymers or copolymers containing an α-olefin of 3 to 20 carbon atoms in amounts of 50 to 100 mol%. Isotactic polypropylenes and propylene/α-olefin copolymers are preferred. The isotactic polypropylenes may be homo, random or block polymers and may have an arbitrary melt flow rate. Particularly preferably, the olefinic thermoplastic elastomer composition may be prepared by the following process in order to achieve an optimum equilibrium creep compliance.

That is, an organic peroxide-uncrosslinkable olefin plastic (a) and an organic peroxide-crosslinkable olefin copolymer rubber are dynamically heat treated in the presence of a crosslinking agent to obtain an olefinic thermoplastic elastomer (A), and the olefinic thermoplastic elastomer (A) is melt kneaded with an organic peroxide-uncrosslinkable olefin plastic (b) to obtain the olefinic thermoplastic elastomer composition.

The organic peroxide-uncrosslinkable olefin plastic (b) comprises 5 to 40%, preferably 8 to 35% by mass of polymer components with intrinsic viscosity [η] of at least 5 dl/g measured in decalin at 135°C, and has a melt tension of 2 to 20 g, preferably 2 to 18 g (extrusion nozzle diameter: 2.095 mm, nozzle length: 8 mm, extrusion temperature: 230°C, extrusion rate: 15 mm/min, take-off speed: 15 m/min) and an MFR of 0.1 to 20 g/10 min, preferably 0.5 to 15 g/10 min measured at 230°C under 2.16kg load.

The organic peroxide-uncrosslinkable olefin plastic (b) is preferably used in amounts of 1 to 40 parts by weight, and more preferably 2 to 30 parts by weight based on 100 parts by weight of the olefinic thermoplastic elastomer (A).

The uncrosslinkable olefin plastic (b) preferably satisfies the above polymer content, MFR and melt tension since the use of polypropylenes conventional in the art which range in MFR from 0.01 to 2 g/10 min (ASTM D 1238-65T, 230°C, 2.16kg load) will not always improve the foamability.

In the invention, the organic peroxide-uncrosslinkable olefin plastics (a) and (b) function to impart fluidity and foamability to the resin composition and mechanical strength and heat resistance to the foam. The weight ratio between (a) and (b) is preferably such that (b) is used in amounts of 10 to 350 parts, more preferably 20 to 300 parts by weight based on 100 parts by weight of (a).

The organic peroxide-uncrosslinkable olefin plastic (a) preferably ranges in MFR (ASTM D 1238-65T, 230°C, 2.16kg load) from 0.5 to 50 g/10 min, and particularly 1 to 40 g/10 min.

In the invention, the organic peroxide-crosslinkable olefin copolymer rubber can be used together with a different kind of rubber from the organic peroxide-crosslinkable olefin copolymer rubber as far as it is not detrimental to achieving the objects of the invention. Examples of such a different kind of rubber include diene rubbers, such as styrene/butadiene rubbers (SBR), nitrile rubbers (NBR) and natural rubbers (NR); and silicone rubbers.

It is also possible to use an organic peroxide-uncrosslinkable rubber-like material which is different from the organic peroxide-uncrosslinkable olefin plastic within the limit not detrimental to the objects of the invention.

This organic peroxide-uncrosslinkable rubber-like material is a hydrocarbon-based rubber-like material that is not crosslinked when kneaded under heating together with an organic peroxide so that it does not reduce flowability. Specific examples thereof include polyisobutylenes, butyl rubbers, and propylene/ethylene copolymer rubbers and propylene/1-butene copolymer rubbers with at least 70 mol% propylene content. Of these, polyisobutylenes and butyl rubbers are preferable due to their properties and handling easiness. Particularly, polyisobutylenes and butyl rubbers with Mooney viscosity of not more than 60 $ML_{1+4}$ (100°C) are preferable in view of enhancing the flowability of the composition.

The crosslinking agent for use in the olefinic thermoplastic elastomer foaming composition is preferably an organic peroxide.

Examples of the organic peroxide include dicumyl organic peroxide, di-tert-butyl organic peroxide, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl) benzene, 1,1-bis(tert-butylperoxy)-3,3,5-trimethylcyclohexane, n-butyl-4,4-bis(tert-butylperoxy)valerate, benzoyl organic peroxide, p-chlorobenzoyl peroxide, 2,4-dichlorobenzoyl organic peroxide, tert-butylperoxy benzoate, tert-butyl perbenzoate, tert-butylperoxyisopropyl carbonate, diacetyl organic peroxide, lauroyl organic peroxide and tert-butylcumyl organic peroxide.

In terms of odor properties and scorch stability, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane and n-butyl-4,4-bis(tert-butylperoxy)valerate are preferred, and particularly 1,3-bis(tert-butylperoxyisopropyl)benzene is the most preferred.

The partial crosslinking by the above organic peroxide can be carried out using a crosslinking auxiliary for peroxide crosslinking, such as sulfur, p-quinone dioxime, p,p'-dibenzoyl quinone dioxime, N-methyl-N-4-dinitrosoaniline, nitrobenzene, diphenylguanidine or trimethylolpropane-N,N'-m-phenylene dimaleimide; or a polyfunctional vinyl monomer, such as divinylbenzene, triallyl cyanurate, a polyfunctional methacrylate monomer (e.g., ethylene glycol dimethacrylate, diethylene glycol dimethacrylate, polyethylene glycol dimethacrylate, trimethylol propane trimethacrylate or allyl methacrylate), vinyl butyrate or vinyl stearate.

With the use of the above compounds, uniform and mild crosslinking can be expected. Particularly in the invention, divinylbenzene is the most preferable. Divinylbenzene is easy to handle and has a good compatibility with the principal components for the crosslinking treatment, i.e., the organic peroxide-crosslinkable olefin copolymer rubber and the organic peroxide-uncrosslinkable olefin plastic. Moreover, divinylbenzene has a function of solubilizing the organic peroxide and works as a dispersing agent for the organic peroxide. Accordingly, the crosslinking can be uniformly effected by the heat treatment and the resulting partially-crosslinked thermoplastic elastomer composition can be excellent in the balance between flowability and other properties.

The above crosslinking auxiliary or polyfunctional vinyl monomer is desirably used in amounts above the conventional range, for example in amounts of 0.5 to 5 wt%, preferably 0.6 to 4 wt%, and more preferably 0.7 to 3 wt% in ratio to all the components for the crosslinking. When the crosslinking auxiliary or the polyfunctional vinyl monomer is used in the above amounts, the resulting olefinic thermoplastic elastomer foaming composition can have a low compression set and good moldability.

The olefinic thermoplastic elastomer foaming composition desirably has a density of elastically effective chains higher than the conventional value, for example $3.0\times10^{-5}$ to $2.0\times10^{-4}$ (mol/$cm^3$), and preferably $5.0\times10^{-5}$ to $1.8\times10^{-4}$ (mol/$cm^3$) in order to improve the appearance and compression set of the foam.

The density of elastically effective chains can be controlled by adjusting the amount of the crosslinking agent, the molar ratio (ethylene/$\alpha$-olefin) of structural units derived from ethylene and from the $\alpha$-olefin, and the amount of the non-conjugated polyene in preparing the ethylene/$\alpha$-olefin/non-conjugated polyene copolymer rubber. The density of elastically effective chains tends to be augmented with the increases of the amount of the crosslinking agent and the contents of ethylene and the non-conjugated polyene.

In order to obtain good moldability, the crosslinked olefin copolymer rubber is preferably dispersed in the olefinic thermoplastic elastomer foaming composition as particles with a mean diameter of less than 20 $\mu$m, preferably less than 10 $\mu$m, and more preferably less than 5 $\mu$m. The dispersed particles having a mean particle diameter of less than 20 $\mu$m can be obtained by dynamically heat treating the olefin copolymer rubber, the olefin plastic and optionally a softener in the presence of the organic peroxide under the condition expressed by the following formula:

$$5.5 < 2.2\log X + \log Y - \log Z + (T-180) \div 100 < 6.5$$

wherein T is a resin temperature (°C) at the nozzle port of extruder, X is a screw diameter (mm) of extruder, Y is a maximum shear rate ($sec^{-1}$) applied in an extruder, and Z is a throughput (kg/h). Dynamically heat treating means to knead the above components in molten state. The dynamic heat treatment can be carried out using an open mixing mill, a Banbury internal mixer, a kneader, a single-screw or twin-screw extruder or a continuous mixer, preferably an internal kneading apparatus. The dynamic heat treatment is preferably conducted in an inert gas atmosphere, such as nitrogen or carbon dioxide gas.

It is generally preferable to conduct the dynamic heat treatment with a twin-screw extruder at a resin temperature of 170 to 270°C, for a kneading time of 1 to 10 minutes and at a shear rate of 2000 to 7000 $sec^{-1}$.

In view of good moldability and flexibility of the resulting foam, the olefinic thermoplastic elastomer foaming composition desirably contains a softener in amounts of 0 to 150 parts, preferably 20 to 135 parts by weight based on 100 parts by weight of the total amount of the olefin copolymer rubber and the olefin plastic(s).

Examples of the softener include petroleum softeners, such as process oils, lubricating oils, paraffins, liquid paraffins, petroleum asphalts and vaselines;

coal tar softeners, such as coal tars and coal tar pitches;

fatty oil softeners, such as castor oils, colza oils, soybean oils and coconut oils;

waxes, such as tall oils, beeswaxes, carnauba waxes and lanolins;

fatty acids and metal salts thereof, such as ricinolic acid, palmitic acid, stearic acid, barium stearate and calcium stearate;

naphthenic acid and metallic soaps thereof;

pine oils, rosins and derivatives thereof;

synthetic polymeric substances, such as terpene resins, petroleum resins, coumarone-indene resins and atactic polypropylenes;

ester plasticizers, such as dioctyl phthalate, dioctyl adipate and dioctyl sebacate;

carbonate plasticizers, such as diisododecyl carbonate;

and others, such as microcrystalline waxes, rubber substitutes (factices), liquid polybutadienes, modified liquid polybutadienes, liquid Thiokols and hydrocarbon synthetic lubricating oils. Of these, the petroleum softeners and the hydrocarbon synthetic lubricating oils are preferable.

The olefinic thermoplastic elastomer foaming composition is foamed with a foaming agent to give the foam of the invention. Exemplary foaming agents include inorganic or organic, thermally decomposable foaming agents (chemical foaming agents), carbon dioxide, nitrogen and a mixture of carbon dioxide and nitrogen.

Examples of the inorganic thermally decomposable foaming agents include inorganic carbonates, such as sodium hydrogencarbonate, sodium carbonate, ammonium hydrogencarbonate and ammonium carbonate; and nitrites, such as ammonium nitrite.

Examples of the organic thermally decomposable foaming agents include nitroso compounds, such as N,N'-dimethyl-N,N'-dinitrosoterephthalamide and N,N'-dinitrosopentamethylenetetramine;

azo compounds, such as azodicarbonamide, azobisisobutyronitrile, azocyclohexylnitrile, azodiaminobenzene and barium azodicarboxylate;

sulfonyl hydrazide compounds, such as benzenesulfonyl hydrazide, toluenesulfonyl hydrazide, p,p'-oxybis(benzenesulfonyl hydrazide) and diphenyl sulfone-3,3'-disulfonyl hydrazide;

and azide compounds, such as calcium azide, 4,4'-diphenyldisulfonyl azide and p-toluenesulfonyl azide.

When carbon dioxide or nitrogen is used as the foaming agent, it is preferably in a supercritical state when mixed within the olefinic thermoplastic elastomer foaming composition so that they can be mixed together quickly and homogenously and further so that fine cells can be obtained.

The foaming agent can be used in amounts of 0. 5 to 30 parts, preferably 1 to 20 parts by weight based on 100 parts by weight of the olefinic thermoplastic elastomer foaming composition.

Moreover, a foaming auxiliary can be added according to necessity and the amount thereof is preferably 0.01 to 10 parts, more preferably 0.02 to 5 parts by weight based on 100 parts by weight of the total amount of the olefin plastic (s) and the crosslinked olefin copolymer rubber.

Examples of the foaming auxiliary include metallic compounds, such as of zinc, calcium, lead, iron and barium; higher fatty acids, such as stearic acid, and metallic salts thereof; and inorganic fine particles, such as of talk, barium sulfate and silica. It is generally preferable to use the foaming auxiliary since it functions to lower the decomposition temperature of the foaming agent, accelerate the decomposition, nucleate the cell, and uniform the cells. In particular, the compound which is decomposed around the temperature at which the raw materials are pelletized by extrusion or the foam is extruded, has a function of forming fine and homogenous cells in the foam.

Examples of the foaming auxiliary include mixtures of a polyvalent carboxylic acid (e.g., citric acid, oxalic acid, fumaric acid, phthalic acid, malic acid, tartaric acid, lactic acid, 1,2-dicarboxycyclohexane, camphoric acid, ethylenediamine tetraacetic acid, triethylenetetramine hexaacetic acid or nitrilotriacetic acid) and an inorganic carbonate compound (e.g., sodium hydrogencarbonate, sodium aluminum hydrogencarbonate or potassium hydrogencarbonate); and intermediates obtained by reaction of these compounds, such as salts of polycarboxylic acid (e.g., sodium dihydrogen citrate and potassium oxalate).

Particularly preferably, the thermoplastic elastomer foaming composition is foamed using the thermally decomposable foaming agent and the foaming auxiliary mixture of polycarboxylic acid and carbonate (preferably a mixture of citric acid and sodium hydrogencarbonate, or an intermediate thereof, e.g., disodium citrate). The foam obtained by such foaming can have a low density, a low compression set and a fine cell structure.

It is possible that these decomposable compounds are decomposed at the extrusion foaming or that they are decomposed partially or completely at the pelletization or the like. The optimum amount for addition in terms of decomposition products is equal to the amount for addition in terms of the decomposable compounds.

Within the limit not detrimental to achieving the object of the invention, the olefinic thermoplastic elastomer foaming composition may optionally contain known additives, such as heat stabilizers, weathering stabilizers, anti-aging agents, antistatic agents, fillers, colorants and lubricants.

(Preparation of Olefinic Thermoplastic Elastomer Foaming Composition)

Preferably, the olefinic thermoplastic elastomer foaming composition is obtained by:

mixing and kneading homogeneously the organic peroxide-crosslinkable olefin copolymer rubber, the organic peroxide-uncrosslinkable olefin plastic and optionally a mineral oil softener, etc. and pelletizing the mixture;

mixing the pellets homogenously with the organic peroxide dissolved in divinylbenzene or the like and further optionally with the crosslinking auxiliary, a vulcanization accelerator, an antioxidant, etc. by means of a known kneader, such as a Brabender tumbling mixer, a twin-cylinder Brabender mixer or a Henschel mixer, preferably at 50°C or below;

dynamically heat treating the resultant mixture under the above-mentioned conditions to obtain a partially crosslinked thermoplastic elastomer composition; and

after completion of crosslinking and decomposition by the organic peroxide, further mixing the partially crosslinked thermoplastic elastomer composition with the organic peroxide-uncrosslinkable olefin plastic to optimize the equilibrium creep compliance. The latter organic peroxide-uncrosslinkable olefin plastic may be different from the organic peroxide-uncrosslinkable olefin plastic used in the dynamic heat treatment or an organic peroxide-uncrosslinkable rubber-like material other than the organic peroxide-uncrosslinkable olefin plastic.

Within the limit not detrimental to achieving the objects of the invention, the olefinic thermoplastic elastomer foaming composition may optionally contain known additives, such as fillers, heat stabilizers, anti-aging agents, weathering stabilizers, antistatic agents, lubricants (such as metallic soaps and waxes), pigments, dyes, nucleating agents, flame retardants and anti-blocking agents.

As the filler, those commonly used in rubbers are suitable. Exemplary fillers include carbon blacks, calcium carbonate, calcium silicate, clays, kaolins, talcs, silicas, diatomaceous earth, mica powders, asbestos, barium sulfate, aluminum sulfate, calcium sulfate, magnesium carbonate, molybdenum disulfide, glass fibers, glass beads, Shirasu balloons, graphites and aluminas.

The filler may be used in amounts of 0 to 120 parts, preferably 2 to 100 parts by weight based on 100 parts by weight of the olefinic thermoplastic elastomer foaming composition.

Examples of the optional heat stabilizers, anti-aging agents and weathering stabilizers include known phenol-, sulfite-, phenylalkane-, phosphite- and amine-based stabilizers.

(Preparation of Olefinic Thermoplastic Elastomer Foam)

To prepare the olefinic thermoplastic elastomer foam, the pellets of olefinic thermoplastic elastomer foaming composition are mixed with the foaming agent in the above-specified amount, and optionally further with the foaming auxiliary, a wetting agent, etc. When the chemical foaming agent is used, the foaming agent is first kneaded by a Brabender tumbling mixer, a twin-cylinder Brabender mixer, a ribbon blender or a Henschel mixer, and optionally further kneaded by an open mixing mill, a Banbury internal mixer, an extruder, a kneader or a continuous mixer. Alternatively, the foaming agent may be pelletized using a resin as binder. Then the foaming agent (or pellets thereof) is kneaded with the pellets of olefinic thermoplastic elastomer foaming composition by any of the above mixers.

When using carbon dioxide or nitrogen as the foaming agent, the olefinic thermoplastic elastomer foaming composition can be molten in a resin plasticizing cylinder at 100 to 300°C to compatibilize carbon dioxide or nitrogen with the olefinic thermoplastic elastomer, thereby obtaining the olefinic thermoplastic elastomer foaming composition in molten state. When carbon dioxide or nitrogen is dissolved within the olefinic thermoplastic elastomer foaming composition in a resin plasticizing cylinder, carbon dioxide or nitrogen is preferably in a supercritical state in view of compatibility and uniformity of cells in the foam.

There is specifically no limitation on the method for preparing the foam from the above-obtained foaming composition. For example, a known molding machine for resin processing, such as extrusion, injection molding, blow molding, extrusion blow molding, injection blow molding, blown film extrusion, stamping, compression molding and beads molding, can be appropriately used.

For example, the foam can be prepared by extrusion utilizing the action of the thermally decomposable foaming agent. In this instance, the olefinic thermoplastic elastomer foaming composition is introduced into an extruder, heated in the barrel above either the melting point of the composition or the decomposition temperature of the foaming agent that is higher than the other and pressed to uniformly disperse a gas which produces from decomposition of the foaming agent in the composition.

Subsequently, the molten olefinic thermoplastic elastomer composition in which the decomposition gas has been dispersed uniformly, is transferred to a die which is connected to the front end of extruder having a set temperature optimum for the foaming. Then the composition is extruded through the die into the air or water and thereby the inner pressure is rapidly lowered to effect the foaming. The extruded product is thereafter cooled and solidified with a cooling unit to obtain the objective foam. The thermoplastic elastomer composition which is being extruded preferably has a temperature of 140 to 250°C.

Alternatively, the foam can be prepared by extrusion utilizing supercritical carbon dioxide as the foaming agent. In this case, the olefinic thermoplastic elastomer foaming composition is molten in an extruder, carbon dioxide is heated above its critical temperature (31°C) under its critical pressure within 7.4 to 40 MPa to become supercritical, and the supercritical carbon dioxide is mixed within the olefinic thermoplastic elastomer molten in the extruder.

Subsequently, the molten olefinic thermoplastic elastomer composition mixed with the supercritical carbon dioxide, is transferred to a die which is connected to the front end of extruder having a set temperature optimum for the foaming. Then the composition is extruded through the die into the air and thereby the inner pressure is rapidly lowered to gasify the dissolved carbon dioxide, thereby foaming the composition. The foamed composition is thereafter cooled and solidified with a cooling unit to obtain the objective foam. The thermoplastic elastomer composition which is being extruded preferably has a temperature of 110 to 250°C.

Otherwise, the foam can be prepared by press molding. In this instance, the pellets of foaming composition containing the chemical foaming agent are introduced into a heated mold of pressing machine and molten with or without pressing the mold to effect the foaming, thereby preparing the foam. The mold preferably has a temperature of 110 to 250°C.

Further, the foam can be prepared by injection molding. In this case, the foaming composition is molten by heating in an injection molding machine and injected into a mold while being foamed at the nozzle tip, thereby preparing the foam. The resin which is being injected preferably has a temperature of 110 to 250°C.

These foams obtained by the above processes according to the invention have excellent rubber properties, such as heat resistance, tensile properties, flexibility, weathering resistance and impact resilience, due to the effect of crosslinking of the organic peroxide-crosslinkable olefin copolymer rubber. Further, the foams are more suitable for recycling than vulcanized rubbers.

The olefinic thermoplastic elastomer foam has many applications, such as:

automotive components, such as sponge weatherstrips, body panels, steering wheels and side shields;
footwear components, such as shoe soles and sandals;
electrical components, such as wire coatings, connectors and cap plugs;
civil-engineering materials, such as sealing materials for water-distribution pipes, soil stabilizing sheets and sound barriers;
leisure goods, such as golf club grips, baseball bat grips, swimming fins and swimming goggles; and
miscellaneous goods, such as gaskets, waterproof cloths, sponge scrubbers, draining sheets and cosmetic powder puffs.

## EXAMPLES

The present invention will be explained by the following Examples, but it should be construed that the invention is in no way limited to those Examples. The foams used in the Examples were prepared and measured for properties as described below.

(Testing method)

(1) Extrusion foaming apparatus

(Examples 1-7 and Comparative Examples 1-4)

Tubular foams were extruded by an apparatus shown in Fig. 7(a) under the following conditions:

Extruder: single-screw extruder having a diameter of 50 mm (P50-32ABV produced by Japan Steel Works, Ltd.)

Maximum cylinder temperature: 220°C
Die temperature: 185°C
Die: shown in Fig. 8

Carbon dioxide feed unit: a product of AKICO
Take-off speed: 15 m/min

(Examples 8-16 and Comparative Examples 5-6)

Tubular foams were extruded by an apparatus shown in Fig. 7(b) under the following conditions:

Extruder: single-screw extruder having a diameter of 50 mm (P50-32ABV produced by Japan Steel Works, Ltd.)

Maximum cylinder temperature: 220°C
Die temperature: 185°C
Die: shown in Fig. 8

Take-off speed: 15 m/min

(2) Methods of measuring basic properties

(Measurement of creep compliance)

The creep compliance was measured with a dynamic viscoelasticity measuring device (Dynamic Stress Rheometer SR-5000 available from Rheometrics Scientific, Inc.) and a control software (Orchestrator Version 6.3.2 available from Rheometrics Scientific, Inc.) as follows:

A sample sheet having a thickness of 1.0 to 2.5 mm was placed between parallel circular plates having a diameter of 25 mm, and molten at 170°C. After the sample was molten completely, the spacing between the parallel plates was adjusted to the sample thickness within 1.0 to 2.5 mm and any resin composition protruding from the circular plates was removed.

Then the sample was subjected to a constantly set stress $\sigma_0$ for a time period t between 0 and 600 seconds and thereafter the stress was released to 0 Pa for a time period t between 600 and 1200 seconds. The stress applied to the sample was controlled within 1000 to 10000 Pa in accordance with the viscosity of the resin composition.

During the time period t between 0 and 600 seconds, the strain $\gamma(t)$ was measured at 200 time points sampled logarithmically. For example, when the measurement is conducted at 5 sampling time points within a time period between 10 and 100 seconds, the measurement is made starting from $10^1$ seconds at $10^{1.2}$, $10^{1.4}$, $10^{1.6}$, $10^{1.8}$ and $10^2$ seconds. Likewise, the strain $\gamma(t)$ was measured at 200 time points sampled logarithmically during the time period t between 600 and 1200 seconds. An exemplary measurement result is shown in Fig. 4.

(Measurements of equilibrium creep compliance and equilibrium recovery compliance)

The equilibrium creep compliance $J_e^0$ was measured with the above software "Orchestrator" in automatic steady state mode. The details are as follows.

The creep compliance values J(t), plotted during t=0-600 seconds with 200 sampling time points, were divided into windows by 5% of the total sampling number. Linear approximation was made in each window by the least-squares fitting to obtain a slope. Slopes in two neighboring windows were compared in the direction from the last window to the first window (in the present measurement in the direction from t=600 seconds to t=0 seconds). The slope of which the difference from the neighboring slope was within 10% regarded as a steady state, a line was fitted with this slope to obtain an equilibrium creep compliance $J_e^0$ as shown in Fig. 5.

The equilibrium recovery compliance $J_r$ was determined by subtracting the creep compliance at t=1200 seconds from the creep compliance at t=600 seconds.

(Measurement of density of elastically effective chains)

80g of the olefinic thermoplastic elastomer foaming composition was placed in a mold capable of producing a sheet 20 cm × 20 cm × 2 mm. Thereafter the composition was preheated at 190°C for 6 minutes and then pressed for 5 minutes with a 50 ton press, and further cooled under pressure with a 30°C cooling press for 5 minutes to obtain a pressed sheet. A specimen in 20 mm × 20 mm × 2 mm was punched out from the pressed sheet and swollen by soaking in 50 $cm^3$ of toluene at 37°C for 72 hours in accordance with JIS K6258. Then the density of elastically effective chains was determined using equilibrium swelling from the Flory-Rehner equation:

$$\text{Density of elastically effective chains } \nu \text{ (mol/cm}^3\text{)}$$

$$= \{V_R + \ln(1-V_R) + \mu V_R^{2}\}/-V_0(V_R^{1/3} - V_R/2)$$

wherein:

$V_R$: volume fraction of pure rubber in the swollen thermoplastic elastomer composition,
$\mu$: rubber-solvent interaction parameter (=0.49), and
$V_0$: molar volume of toluene (=108.15 $cm^3$).
$V_R$ is determined from:

$$V_R = Vr/(Vr+Vs)$$

wherein:

Vr: volume of pure rubber in the specimen ($cm^3$), and
Vs: volume of solvent absorbed in the specimen ($cm^3$).

When the volume of pure rubber in the specimen is unknown, the above measurement can be carried out as follows.

The olefinic thermoplastic elastomer foaming composition is press molded into a film with a thickness of 200 to 300 μm and the film is cut into strips 3 to 5 mm on a side. Approximately 5g of the strips are weighed out and subjected to Soxhlet extraction of softener for at least 12 hours using methyl ethyl ketone as an extraction solvent. The extraction residue is added to 100 ml of hot xylene and heated for 3 hours with stirring. The resultant mixture is hot-filtered through a 325-mesh stainless steel gauze which has been weighed in advance, and the dry weight of filtration residue on the metal gauze is measured as a crosslinked rubber weight. When the extraction residue contains a filler, it is heated to 850°C in a nitrogen atmosphere with a thermobalance TGA and thereafter maintained in an air atmosphere for 19 minutes to obtain the reduced weight as a rubber weight.

Separately, the solution of the extraction residue in hot xylene is cooled to room temperature and allowed to stand for at least 5 hours. The solution is then filtered through a 325-mesh stainless steel gauze, and the solvent of the filtrate is completely evaporated. Thereafter the weight is measured as an uncrosslinked rubber weight. The total weight of crosslinked and uncrosslinked rubbers is divided by the specific gravity of rubber to obtain the volume of pure rubber in the specimen.

(Measurement of average particle diameter)

A strip of the olefinic thermoplastic elastomer foaming composition was photographed at 5000-fold magnification with a transmission electron microscope. An area 24 μm × 32 μm of the picture was scanned and the image was analyzed with an image analysis and processing soft "Image-Pro Plus (available from Planetron Inc.)" to determine the average particle diameter of dispersed rubber particles.

(Measurement of density of foam)

The density of the foam can be determined in accordance with JIS K6268-A or using an automatic gravimeter available in the market, such as an electronic gravimeter MS-200S available from Mirage Trading Co., Ltd. In the Examples, the density of the foam was measured with an electronic gravimeter MS-200S available from Mirage Trading Co., Ltd.

(Measurement of compression set)

A tubular foam extruded through the extruder die shown in Fig. 8 was cut to prepare three specimens 3 cm long. Each specimen was stood on a flat and polished stainless steel plate on the basis of its flat surface, and sandwiched with another parallel compression plate of such stainless steel. Thereafter the specimen was compressed to 50% thickness in a vertical direction to its basal surface and maintained in a 70°C oven for 22 hours in that state. Then the specimen was taken out of the oven and the compression plates were removed. After the specimen was allowed to stand on a flat place under standard conditions for 30 minutes, the compression set thereof was calculated from the following equation. The compression sets of the three specimens were averaged to determine the compression set.

$$\text{Compression set Cs} = (t_0\text{-}t_2) \div (t_0\text{-}t_1) \times 100\ (\%)$$

wherein:

- $t_0$: original thickness of the central portion of specimen (mm),
- $t_1$: to × 0.5 (mm), and
- $t_2$: thickness of the central portion of compressed specimen measured after 30 minutes of standing (mm).

(Measurement of surface roughness)

The unevenness on the 50 mm-long foam was digitally expressed with a contact surface roughness tester: SURFCOM 200B (Tokyo Seimitsu Co., Ltd.). From the sum (h1) of the digital values of ten most protruded parts, the sum (h2) of the digital values of ten most depressed parts was subtracted, and the obtained value (h1-h2) was divided by 10 to determine the surface roughness.

(Measurement of cell diameter)

A section of the foam which was perpendicular to its longitudinal direction was observed at 100-fold magnification by a digital microscope VH-6300 (KEYENCE CORPORATION). Arbitrary 10 cells were selected and measured for length with an exclusive lattice. The measured values were averaged to determine the cell diameter.

(Measurement of intrinsic viscosity)

The intrinsic viscosity [η] was measured in decalin (decahydronaphthalene) at 135°C.

(Measurement of melt flow rate (MFR))

The MFR was measured at 230°C under 2.16kg load in accordance with ASTM D 1238-65T.

(Measurement of melt tension)

A strand, which was being extruded through an extrusion nozzle having a diameter of 2.095 mm and a length of 8 mm, at an extrusion temperature of 230°C and at an extrusion rate of 15 mm/min, was taken off at a take-off speed of 15 m/min with Capirograph (available from Toyo Seiki Seisaku-sho, Ltd.) to measure the melt tension.

Example 1

100 parts by weight of an ethylene/propylene/5-ethylidene-2-norbornene copolymer rubber (hereinafter EPT-1) having an ethylene content of 63 mol%, an iodine value of 22 and an intrinsic viscosity [η] of 3.2 dl/g was blended with 80 parts by weight of a mineral oil softener (Diana process oil PW-380 available from Idemitsu Kosan Co., Ltd.) to obtain an oil-extended EPT. 180 parts by weight of the resultant oil-extended EPT was mixed with 35 parts by weight of a homopolypropylene (hereinafter PP-1) having a melt flow rate of 1.5 g/10 min (ASTM D 1238-65T, 230°C, 2.16kg load) in an internal mixer (Mixtron BB16 available from Kobe Steel, Ltd.). The mixture was shaped into a sheet through sheeting rolls and pelletized by a pelletizer (available from Horai Tekko Co., Ltd.).

215 parts by weight of the pellets were mingled with a solution of 1.75 parts by weight of a crosslinking agent (1,3-bis(tert-butylperoxyisopropyl)benzene) in 1.75 parts by weight of a crosslinking auxiliary (divinylbenzene), and 0.2 part by weight of an antioxidant (tetrakis-{methylene-3-(3',5-di-tert-butyl-4'-hydroxyphenyl)propionate}methane) with the use of a tumbling agitator. As a result, these crosslinking agent, crosslinking auxiliary and antioxidant evenly adpressed the pellets.

The pellets were then kneaded and extruded by a twin-screw extruder (TEM-50 available from Toshiba Machine Co., Ltd.) at a throughput of 40 kg/h at 220°C. The above dynamic heat treatment yielded a partially-crosslinked thermoplastic elastomer composition in which particles of crosslinked EPT had been homogenously dispersed in PP.

The partially-crosslinked thermoplastic elastomer composition was kneaded and extruded with 20 parts by weight of a homopolypropylene (hereinafter PP-2) which contained 10% by mass of polymer components with intrinsic viscosity [n] of 9 dl/g and which had a melt flow rate of 4.0 g/10 min and a melt tension of 3 g, and further with 20 parts by weight of the above mineral oil softener by the above twin-screw extruder at a throughput of 40 kg/h at 200°C. Thus, an olefinic thermoplastic elastomer foaming composition was obtained.

Based on 100 parts by weight of the olefinic thermoplastic elastomer foaming composition, 0.05 part by weight of a nucleating agent Hydrocerol CF (available from Boehringer Ingelheim Chemicals) was added thereto. They were subjected to extrusion foaming with the extrusion foaming apparatus shown in Fig. 7(a) under the conditions of an extrusion temperature of 200°C, a throughput of 20 kg/h, a carbon dioxide supply pressure of 15 MPa and a carbon dioxide supply of 1 part by weight per 100 parts by weight of the olefinic thermoplastic elastomer foaming composition.

The olefinic thermoplastic elastomer foam obtained as above was measured for the above properties. The results are given in Table 1.

Example 2

An olefinic thermoplastic elastomer foam was obtained in the same manner as in Example 1 except that:

an ethylene/propylene/5-ethylidene-2-norbornene copolymer rubber (hereinafter EPT-2) having an ethylene content of 68 mol%, an iodine value of 22 and an intrinsic viscosity [η] of 3.9 dl/g) was used instead of the EPT-1, and an oil-extended EPT was prepared by blending 100 parts by weight of the EPT-2 with 80 parts by weight of the mineral oil softener (Diana process oil PW-380 available from Idemitsu Kosan Co., Ltd.);

the PP-2 was replaced by a homopolypropylene (hereinafter PP-3) which contained 30% by mass of polymer components with intrinsic viscosity [η] of 9 dl/g and which had a melt flow rate of 0.5 g/10 min and a melt tension of 12 g to obtain a partially-crosslinked thermoplastic elastomer composition; and

20 parts by weight of the mineral oil softener was not additionally added to the partially-crosslinked thermoplastic elastomer composition.

The results of the property measurements are given in Table 1.

Example 3

An olefinic thermoplastic elastomer foam was obtained in the same manner as in Example 1 except that:

an oil-extended EPT was prepared by blending 100 parts by weight of the EPT-2 with 65 parts by weight of the mineral oil softener (Diana process oil PW-380 available from Idemitsu Kosan Co., Ltd.),
the crosslinking agent (1,3-bis(tert-butylperoxyisopropyl)benzene) and the crosslinking auxiliary (divinylbenzene) were used in amounts of 0.75 part and 1.0 part by weight respectively to obtain a partially-crosslinked thermoplastic elastomer composition, and
20 parts by weight of the mineral oil softener was not additionally added to the partially-crosslinked thermoplastic elastomer composition.

The results of the property measurements are given in Table 1.

Example 4

An olefinic thermoplastic elastomer foam was obtained in the same manner as in Example 1 except that:

an ethylene/propylene/5-ethylidene-2-norbornene copolymer rubber (hereinafter EPT-3) having an ethylene content of 78 mol%, an iodine value of 15 and an intrinsic viscosity [η] of 3. 3 dl/g was used instead of the EPT-1, and an oil-extended EPT was prepared by blending 100 parts by weight of the EPT-3 with 75 parts by weight of the mineral oil softener (Diana process oil PW-380 available from Idemitsu Kosan Co., Ltd.);
the PP-1 was replaced by a block polypropylene (hereinafter PP-4) which contained 8% by mass of ethylene as a comonomer and which had a melt flow rate of 0.5 g/10 min,
the crosslinking agent (1,3-bis(tert-butylperoxyisopropyl)benzene) and the crosslinking auxiliary: (divinylbenzene) were used in amounts of 0.6 part and 0. 6 part by weight respectively to obtain a partially-crosslinked thermoplastic elastomer composition; and
the mineral oil softener 20 parts by weight was not additionally added to the partially-crosslinked thermoplastic elastomer composition.

The results of the property measurements are given in Table 1.

Example 5

An olefinic thermoplastic elastomer foam was obtained in the same manner as in Example 1 except that:

205 parts by weight of an oil-extended EPT, which was prepared by blending 100 parts by weight of the EPT-1 with 105 parts by weight of the mineral oil softener was used to obtain a partially-crosslinked thermoplastic elastomer composition, and
15 parts by weight of the PP-2 and 20 parts by weight of the mineral oil softener were added to the partially-crosslinked thermoplastic elastomer composition.

The results of the property measurements are given in Table 1.

Example 6

An olefinic thermoplastic elastomer foam was obtained in the same manner as in Example 1 except that the foaming agent was changed from carbon dioxide to 2 parts by weight of an azodicarbonamide chemical foaming agent (VINYFOR DW-6 available from Eiwa Chemical Ind. Co., Ltd.).
The results of the property measurements are given in Table 1.

Example 7

An olefinic thermoplastic elastomer foam was obtained in the same manner as in Example 1 except that the foaming agent was changed from carbon dioxide to 2 parts by weight of sodium bicarbonate (POLYTHLENE EE405D available from Eiwa Chemical Ind. Co., Ltd.).

The results of the property measurements are given in Table 1.

Comparative Example 1

An olefinic thermoplastic elastomer foam was obtained in the same manner as in Example 1 except that the crosslinking agent (1,3-bis(tert-butylperoxyisopropyl)benzene) and the crosslinking auxiliary (divinylbenzene) were not used, i.e., the partial crosslinking was not effected.
The results of the property measurements are given in Table 2.

Comparative Example 2

An olefinic thermoplastic elastomer foam was obtained in the same manner as in Example 1 except that:

the PP-1 was replaced by the block polypropylene (hereinafter PP-4) which contained 8% by mass of ethylene as a comonomer and which had a melt flow rate of 0.5 g/10 min,
the PP-2 was replaced by a random polypropylene (hereinafter PP-5) which contained 4% by mass of ethylene as a comonomer and which had a melt flow rate of 3.0 g/10 min and a melt tension of 0.7 g, and
15 parts by weight of a crosslinking agent (alkylphenol resin powder (HITANOL 2501 available from Hitachi Chemical Co., Ltd.)) and 2 parts by weight of stannous chloride were used in place of the crosslinking agent (1,3-bis (tert-butylperoxyisopropyl)benzene) and the crosslinking auxiliary (divinylbenzene).

The results of the property measurements are given in Table 2.

Comparative Example 3

An olefinic thermoplastic elastomer foam was obtained in the same manner as in Example 1 except that the crosslinking agent (1,3-bis(tert-butylperoxyisopropyl)benzene) and the crosslinking auxiliary (divinylbenzene) were used in amounts of 0.2 part and 0.2 part by weight respectively.
The results of the property measurements are given in Table 2.

Comparative Example 4

An olefinic thermoplastic elastomer foam was obtained in the same manner as in Example 1 except that:

the PP-1 was replaced by the PP-4,
the PP-2 was replaced by a random polypropylene (hereinafter PP-5) which contained 4% by mass of ethylene as a comonomer and which had a melt flow rate of 0.5 g/10 min and a melt tension of 1.1 g, and
the crosslinking agent (1,3-bis(tert-butylperoxyisopropyl)benzene) and the crosslinking auxiliary (divinylbenzene) were used in amounts of 2.7 parts and 2. 7 parts by weight respectively.

The results of the property measurements are given in Table 2.

Table 1

| | Ex. 1 | Ex. 2 | Ex. 3 | Ex. 4 | Ex. 5 | Ex. 6 | Ex. 7 |
|---|---|---|---|---|---|---|---|
| **Composition** | | | | | | | |
| Crosslinkable olefin copolymer rubber | EPT-1 | EPT-2 | EPT-2 | EPT-3 | EPT-1 | EPT-1 | EPT-1 |
| Amount thereof (parts by weight) | 100 | 100 | 100 | 100 | 100 | 100 | 100 |
| Uncrosslinkable olefin plastic | PP-1 | PP-1 | PP-1 | PP-4 | PP-1 | PP-1 | PP-1 |
| Amount thereof (parts by weight) | 35 | 35 | 35 | 35 | 35 | 35 | 35 |
| Uncrosslinkable olefin plastic | PP-2 | PP-3 | PP-2 | PP-2 | PP-2 | PP-2 | PP-2 |
| Amount thereof (parts by weight) | 20 | 20 | 20 | 20 | 15 | 20 | 20 |
| Amount of softener (parts by weight) | 100 | 80 | 65 | 75 | 125 | 100 | 100 |
| **Properties of composition** | | | | | | | |
| Equilibrium creep compliance $J_e^0$ ($Pa^{-1}$) | $6.6\times10^{-5}$ | $2.7\times10^{-5}$ | $9.6\times10^{-5}$ | $4.9\times10^{-5}$ | $1.2\times10^{-4}$ | $6.6\times10^{-5}$ | $6.6\times10^{-5}$ |
| Equilibrium recovery compliance $J_r$ ($Pa^{-1}$) | $6.4\times10^{-5}$ | $2.7\times10^{-5}$ | $9.0\times10^{-5}$ | $4.6\times10^{-5}$ | $1.1\times10^{-4}$ | $6.4\times10^{-5}$ | $6.4\times10^{-5}$ |
| Density of elastically effective chains ν ($mol/cm^3$) | $1.17\times10^{-4}$ | $1.43\times10^{-4}$ | $9.20\times10^{-5}$ | $5.86\times10^{-5}$ | $1.01\times10^{-4}$ | $1.17\times10^{-4}$ | $1.17\times10^{-4}$ |
| Average diameter Da (μm) | 2 | 1 | 1 | 10 | 3 | 2 | 2 |
| **Properties of foam** | | | | | | | |
| Foaming agent | Carbon dioxide | | | | | Chemical foaming agent | |
| Density ρ ($kg/m^3$) | 380 | 200 | 470 | 310 | 550 | 500 | 480 |
| Compression set Cs (%) | 31 | 27 | 41 | 50 | 36 | 34 | 31 |
| Surface roughness (μm) | 10 | 11 | 8 | 15 | 12 | 10 | 8 |

Table 2

| | Comp. Ex. 1 | Comp. Ex. 2 | Comp. Ex. 3 | Comp. Ex. 4 |
|---|---|---|---|---|
| **Composition** | | | | |
| Crosslinkable olefin copolymer rubber | EPT-1 | EPT-1 | EPT-1 | EPT-1 |
| Amount thereof (parts by weight) | 100 | 100 | 100 | 100 |
| Uncrosslinkable olefin plastic | PP-1 | PP-4 | PP-1 | PP-4 |
| Amount thereof (parts by weight) | 35 | 35 | 35 | 35 |
| Uncrosslinkable olefin plastic | PP-2 | PP-5 | PP-2 | PP-5 |
| Amount thereof (parts by weight) | 20 | 20 | 20 | 20 |
| Amount of softener (parts by weight) | 100 | 100 | 100 | 100 |
| **Properties of composition** | | | | |
| Equilibrium creep compliance $J_e^0$ ($Pa^{-1}$) | $5.8\times10^{-4}$ | $7.6\times10^{-4}$ | $5.3\times10^{-4}$ | $8.5\times10^{-7}$ |
| Equilibrium recovery compliance $J_r$ ($Pa^{-1}$) | $8.9\times10^{-4}$ | $7.4\times10^{-4}$ | $5.2\times10^{-4}$ | $8.2\times10^{-7}$ |
| Density of elastically effective chains ν ($mol/cm^3$) | $<10^{-5}$ | $1.22\times10^{-4}$ | $2.15\times10^{-5}$ | $2.2\times10^{-4}$ |
| Average diameter Da (μm) | >25 | 20 | 15 | 17 |
| **Properties of foam** | | | | |
| Foaming agent | Carbon dioxide | | | |
| Density ρ ($kg/m^3$) | 780 | 752 | 710 | 770 |
| Compression set Cs (%) | 98 | 47 | 82 | 25 |
| Surface roughness (μm) | 22 | 20 | 14 | 25 |

Example 8

An olefinic thermoplastic elastomer foam was obtained in the same manner as in Example 1 except that:

based on 100 parts by weight of the olefinic thermoplastic elastomer foaming composition,3 parts by weight of a sodium hydrogencarbonate foaming agent (POLYTHLENE EE405D available from Eiwa Chemical Ind. Co., Ltd.) was added thereto, and

they were subjected to extrusion foaming with the extrusion foaming apparatus shown in Fig. 7(b) under the conditions of a resin temperature of 190°C, a head pressure to resin of 2.5 MPa and screw rotations of 50 $min^{-1}$.

The results of the property measurements are given in Table 3.

Example 9

An olefinic thermoplastic elastomer foam was obtained in the same manner as in Example 8 except that:

an ethylene/propylene/5-ethylidene-2-norbornene copolymer rubber (hereinafter EPT-2) having an ethylene content of 68 mol%, an iodine value of 22 and an intrinsic viscosity [η] of 3.9 dl/g) was used instead of the EPT-1, and an oil-extended EPT was prepared by blending 100 parts by weight of the EPT-2 with 80 parts by weight of the mineral oil softener (Diana process oil PW-380 available from Idemitsu Kosan Co., Ltd.);
the PP-2 was replaced by a homopolypropylene (hereinafter PP-3) which contained 30% by mass of polymer components with intrinsic viscosity [η] of 9 dl/g and which had a melt flow rate of 0.5 g/10 min and a melt tension of 12 g to obtain a partially-crosslinked thermoplastic elastomer composition; and
20 parts by weight of the mineral oil softener was not additionally added to the partially-crosslinked thermoplastic elastomer composition.

The results of the property measurements are given in Table 3.

Example 10

An olefinic thermoplastic elastomer foam was obtained in the same manner as in Example 8 except that:

the oil-extended EPT was prepared by blending 100 parts by weight of the EPT-2 with 65 parts by weight of the mineral oil softener (Diana process oil PW-380 available from Idemitsu Kosan Co., Ltd.),
the crosslinking agent (1,3-bis(tert-butylperoxyisopropyl)benzene) and the crosslinking auxiliary (divinylbenzene) were used in amounts of 0.75 part and 1.0 part by weight respectively to obtain a partially-crosslinked thermoplastic elastomer composition, and
the mineral oil softener 20 parts by weight was not additionally added to the partially-crosslinked thermoplastic elastomer composition.

The results of the property measurements are given in Table 3.

Example 11

An olefinic thermoplastic elastomer foam was obtained in the same manner as in Example 8 except that:

an ethylene/propylene/5-ethylidene-2-norbornene copolymer rubber (hereinafter EPT-3) having an ethylene content of 78 mol%, an iodine value of 15 and an intrinsic viscosity [η] of 3.3 dl/g was used instead of the EPT-1, and an oil-extended EPT was prepared by blending 100 parts by weight of the EPT-3 with 75 parts by weight of the mineral oil softener (Diana process oil PW-380 available from Idemitsu Kosan Co., Ltd.);
the PP-1 was replaced by a block polypropylene (hereinafter PP-4) which contained 8% by mass of ethylene as a comonomer and which had a melt flow rate of 0.5 g/10 min,
the crosslinking agent (1,3-bis(tert-butylperoxyisopropyl)benzene) and the crosslinking auxiliary: (divinylbenzene) were used in amounts of 0.6 part and 0.6 part by weight respectively to obtain a partially-crosslinked thermoplastic elastomer composition; and
the mineral oil softener 20 parts by weight was not additionally added to the partially-crosslinked thermoplastic elastomer composition.

The results of the property measurements are given in Table 3.

Example 12

An olefinic thermoplastic elastomer foam was obtained in the same manner as in Example 8 except that the sodium hydrogencarbonate foaming agent was used in an amount of 6 parts by weight together with 1.0 part by weight of a foaming auxiliary mixture of sodium bicarbonate and citric acid.
The results of the property measurements are given in Table 3.

Example 13

An olefinic thermoplastic elastomer foam was obtained in the same manner as in Example 8 except that the sodium hydrogencarbonate foaming agent was replaced by 2.0 parts by weight of an azodicarbonamide foaming agent (VINYFOR DW-6 available from Eiwa Chemical Ind. Co., Ltd.).
The results of the property measurements are given in Table 3.

Example 14

An olefinic thermoplastic elastomer foam was obtained in the same manner as in Example 8 except that the sodium hydrogencarbonate foaming agent was replaced by 4.0 parts by weight of an azodicarbonamide foaming agent (VINYFOR DW-6 available from Eiwa Chemical Ind. Co., Ltd.), and a foaming auxiliary mixture of sodium bicarbonate and citric acid was used in an amount of 0.5 part by weight.
The results of the property measurements are given in Table 3.

Example 15

An olefinic thermoplastic elastomer foam was obtained in the same manner as in Example 8 except that the mixture of sodium bicarbonate and citric acid was not used.
The results of the property measurements are given in Table 4.

Example 16

An olefinic thermoplastic elastomer foam was obtained in the same manner as in Example 8 except that the mixture of sodium bicarbonate and citric acid was replaced by 0.5 part by weight of a urea compound (CELLPASTE 101 available from Eiwa Chemical Ind. Co., Ltd.).
The results of the property measurements are given in Table 4.

Comparative Example 5

An olefinic thermoplastic elastomer foam was obtained in the same manner as in Example 8 except that the crosslinking agent (1,3-bis(tert-butylperoxyisopropyl)benzene) and the crosslinking auxiliary (divinylbenzene) were not used, i.e., the partial crosslinking was not effected.
The results of the property measurements are given in Table 4.

Comparative Example 6

An olefinic thermoplastic elastomer foam was obtained in the same manner as in Example 8 except that:

the PP-1 was replaced by the block polypropylene (hereinafter PP-4) which contained 8% by mass of ethylene as a comonomer and which had a melt flow rate of 0.5 g/10 min,
the PP-2 was replaced by a random polypropylene (hereinafter PP-5) which contained 4% by mass of ethylene as a comonomer and which had a melt flow rate of 3.0 g/10 min and a melt tension of 0.7 g, and
15 parts by weight of a crosslinking agent (alkylphenol resin powder (HITANOL 2501 available from Hitachi Chemical Co., Ltd.)) and 2 parts by weight of stannous chloride were used in place of the crosslinking agent (1,3-bis(tert-butylperoxyisopropyl)benzene) and the crosslinking auxiliary (divinylbenzene).

The results of the property measurements are given in Table 4.

Table 3

| | Ex. 8 | Ex. 9 | Ex. 10 | Ex. 11 | Ex. 12 | Ex. 13 | Ex. 14 |
|---|---|---|---|---|---|---|---|
| **Composition** | | | | | | | |
| Crosslinkable olefin copolymer rubber | EPT-1 | EPT-2 | EPT-2 | EPT-3 | EPT-1 | EPT-1 | EPT-1 |
| Amount thereof (parts by weight) | 100 | 100 | 100 | 100 | 100 | 100 | 100 |
| Uncrosslinkable olefin plastic | PP-1 | PP-1 | PP-1 | PP-4 | PP-1 | PP-1 | PP-1 |
| Amount thereof (parts by weight) | 35 | 35 | 35 | 35 | 35 | 35 | 35 |
| Uncrosslinkable olefin plastic | PP-2 | PP-3 | PP-2 | PP-2 | PP-2 | PP-2 | PP-2 |
| Amount thereof (parts by weight) | 20 | 20 | 20 | 20 | 20 | 20 | 20 |
| Amount of softener (parts by weight) | 100 | 80 | 65 | 75 | 100 | 100 | 100 |
| **Properties of composition** | | | | | | | |
| Equilibrium creep compliance $J_e^0$ ($Pa^{-1}$) | $6.6\times10^{-5}$ | $2.7\times10^{-5}$ | $9.6\times10^{-5}$ | $4.9\times10^{-5}$ | $6.6\times10^{-5}$ | $6.6\times10^{-5}$ | $6.6\times10^{-5}$ |
| Equilibrium recovery compliance $J_r$ ($Pa^{-1}$) | $6.4\times10^{-5}$ | $2.7\times10^{-5}$ | $9.0\times10^{-5}$ | $4.6\times10^{-5}$ | $6.4\times10^{-5}$ | $6.4\times10^{-5}$ | $6.4\times10^{-5}$ |
| Density of elastically effective chains ν ($mol/cm^3$) | $1.17\times10^{-4}$ | $1.43\times10^{-4}$ | $9.20\times10^{-5}$ | $6.21\times10^{-5}$ | $1.17\times10^{-4}$ | $1.17\times10^{-4}$ | $1.17\times10^{-4}$ |
| Average diameter Da (μm) | 2 | 1 | 1 | 10 | 2 | 2 | 2 |
| **Foaming** | | | | | | | |
| Foaming agent | Sodium hydrogencarbonate foaming agent | | | | | Azodicarbonamide foaming agent | |
| Amount thereof (parts by weight) | 3 | 3 | 3 | 3 | 6 | 2 | 4 |
| Foaming auxiliary | Mixture of sodium bicarbonate and citric acid | | | | | | |
| Amount thereof (parts by weight) | 0.05 | 0.05 | 0.05 | 0.05 | 1 | 0.05 | 0.05 |
| **Properties of foam** | | | | | | | |
| Density ρ ($kg/m^3$) | 500 | 490 | 530 | 460 | 410 | 520 | 480 |
| Cell diameter (μm) | 90 | 135 | 85 | 185 | 210 | 110 | 230 |
| Compression set Cs (%) | 33 | 30 | 41 | 52 | 36 | 32 | 36 |
| Surface roughness (μm) | 8 | 12 | 8 | 15 | 16 | 10 | 17 |

Table 4

| | Ex. 15 | Ex. 16 | Comp. Ex. 5 | Comp. Ex. 6 |
|---|---|---|---|---|
| **Composition** | | | | |
| Crosslinkable olefin copolymer rubber | EPT-1 | EPT-1 | EPT-1 | EPT-1 |
| Amount thereof (parts by weight) | 100 | 100 | 100 | 100 |
| Uncrosslinkable olefin plastic | PP-1 | PP-1 | PP-1 | PP-4 |
| Amount thereof (parts by weight) | 35 | 35 | 35 | 35 |
| Uncrosslinkable olefin plastic | PP-2 | PP-2 | PP-2 | PP-5 |
| Amount thereof (parts by weight) | 20 | 20 | 20 | 20 |
| Amount of softener (parts by weight) | 100 | 100 | 100 | 100 |
| **Properties of composition** | | | | |
| Equilibrium creep compliance $J_e^0$ ($Pa^{-1}$) | $6.6\times10^{-5}$ | $6.6\times10^{-5}$ | $5.8\times10^{-4}$ | $7.6\times10^{-4}$ |
| Equilibrium recovery compliance $J_r$ ($Pa^{-1}$) | $6.4\times10^{-5}$ | $6.4\times10^{-5}$ | $8.9\times10^{-4}$ | $7.4\times10^{-4}$ |
| Density of elastically effective chains ν ($mol/cm^3$) | $1.17\times10^{-4}$ | $1.17\times10^{-4}$ | $<10^{-5}$ | $1.22\times10^{-4}$ |
| Average diameter Da (μm) | 2 | 2 | >25 | 20 |
| **Foaming** | | | | |
| Foaming agent | Sodium hydrogencarbonate foaming agent | | | |
| Amount thereof (parts by weight) | 3 | 3 | 3 | 3 |
| Foaming auxiliary | None | Urea compound | Mixture of sodium bicarbonate and citric acid | |
| Amount thereof (parts by weight) | 0 | 0.5 | 0.05 | 0.05 |
| **Properties of foam** | | | | |
| Density ρ ($kg/m^3$) | 680 | 560 | 770 | 710 |
| Cell diameter (μm) | 330 | 380 | 480 | 200 |
| Compression set Cs (%) | 39 | 38 | 95 | 45 |
| Surface roughness (μm) | 21 | 24 | 25 | 24 |

## INDUSTRIAL APPLICABILITY

The olefinic thermoplastic elastomer foam of the invention comprises the above-specified olefinic foaming elastomer, so that the foam has a low density, a low compression set, no surface roughness due to cell breakage, a soft touch and excellent heat and weathering resistances. When the olefinic elastomer has been foamed by a thermally decomposable foaming agent and a specific foaming auxiliary, the resultant foam can have a finer cell structure in addition to the above properties and therefore has a benefit of kink resistance.

## Claims

1. An olefinic thermoplastic elastomer foam having a density $\rho$ of less than 700 kg/$m^3$ and a compression set Cs of less than 60% measured after compressed to 50% thickness in a 70°C oven for 22 hours.

2. The olefinic thermoplastic elastomer foam as claimed in Claim 1, wherein the density of elastically effective chains $\nu$ is from $3.0\times10^{-5}$ to $2.0\times10^{-4}$ (mol/$cm^3$).

3. The olefinic thermoplastic elastomer foam as claimed in Claim 1, wherein the mean cell diameter is less than 300 µm.

4. An olefinic thermoplastic elastomer composition for preparing the foam of Claim 1, wherein the composition comprises an olefin plastic and a crosslinked olefin copolymer rubber and has an equilibrium creep compliance $J_e^0$ of $1.0\times10^{-6}$ to $5.0\times10^{-4}$ ($Pa^{-1}$).

5. The olefinic thermoplastic elastomer composition as claimed in Claim 4, comprising the crosslinked olefin copolymer rubber in amounts of 40 to 90 parts by weight and the olefin plastic in amounts of 10 to 60 parts by weight, based on 100 parts by weight of the total amount of the crosslinked olefin copolymer rubber and the olefin plastic.

6. The olefinic thermoplastic elastomer composition as claimed in Claim 4, wherein the crosslinked olefin copolymer rubber is crosslinked by an organic peroxide.

7. The olefinic thermoplastic elastomer composition as claimed in Claim 4, further comprising a softener in amounts of 0 to 150 parts by weight based on 100 parts by weight of the total amount of the crosslinked olefin copolymer rubber and the olefin plastic.

8. The olefinic thermoplastic elastomer composition as claimed in Claim 4, further comprising a foaming auxiliary in amounts of 0.01 to 10 parts by weight based on 100 parts by weight of the total amount of the olefin plastic and the crosslinked olefin copolymer rubber.

9. The olefinic thermoplastic elastomer composition as claimed in Claim 4, which is obtained by melt kneading an olefinic thermoplastic elastomer (A) with an organic peroxide-uncrosslinkable olefin plastic (b), said olefinic thermoplastic elastomer (A) being obtained by dynamically heat treating an organic peroxide-uncrosslinkable olefin plastic (a) and an organic peroxide-crosslinkable olefin rubber in the presence of a crosslinking agent,
   wherein the organic peroxide-uncrosslinkable olefin plastic (b) contains 5 to 40% by mass of polymer components with intrinsic viscosity [$\eta$] of at least 5 dl/g measured in decalin at 135°C, and has a melt tension of 2 to 20g and an MFR of 0.1 to 20 g/10 min measured at 230°C under 2.16kg load.

10. The olefinic thermoplastic elastomer composition as claimed in Claim 9, comprising the organic peroxide-uncrosslinkable olefin plastic (b) in amounts of 1 to 40 parts by weight based on 100 parts by weight of the olefinic thermoplastic elastomer (A).

11. An olefinic thermoplastic elastomer foam obtained by foaming the olefinic thermoplastic elastomer composition of Claim 4 by at least one foaming agent selected from an organic or inorganic thermally decomposable foaming agent, carbon dioxide and nitrogen.

12. An olefinic thermoplastic elastomer foam obtained by foaming the olefinic thermoplastic elastomer composition of Claim 4 by a thermally decomposable foaming agent and a polyvalent carboxylic foaming auxiliary.

**13.** The olefinic thermoplastic elastomer foam as claimed in Claim 1, which can be used as an automotive sponge weatherstrip, a clearance-filling foamed sheet, a building sash sponge seal, a pipe-joint sponge seal, a protect sponge or a thermal insulating sponge tube.

*Fig. 1*

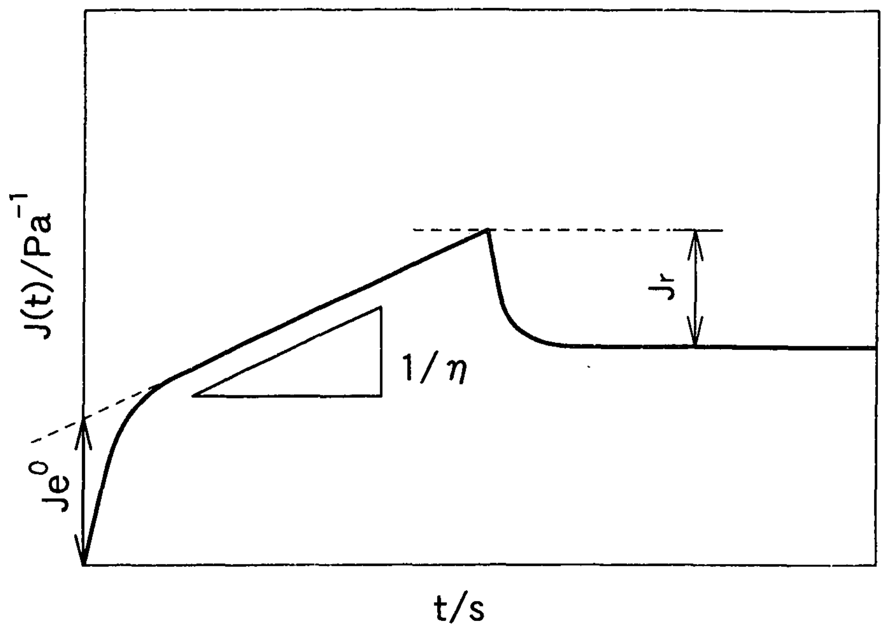


*Fig. 2*

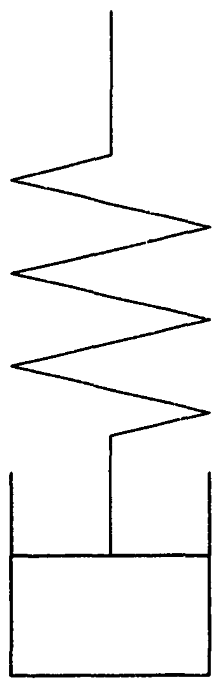

Fig. 3

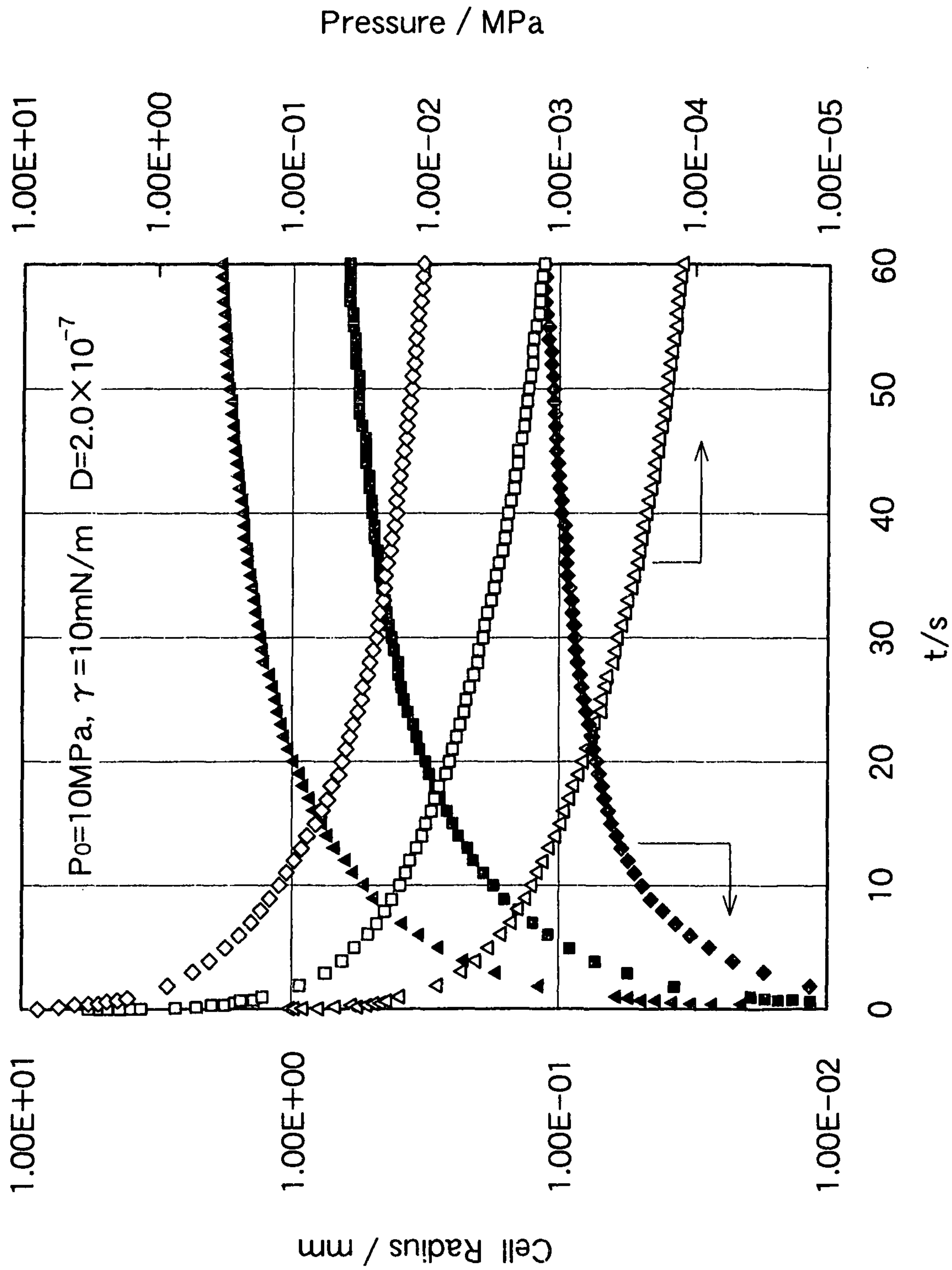
Pressure / MPa
1.00E+01
1.00E+00
1.00E-01
1.00E-02
1.00E-03
1.00E-04
1.00E-05
P0=10MPa, γ=10mN/m D=2.0×10-7
0
10
20
30
40
50
60
t/s
1.00E+01
1.00E+00
1.00E-01
1.00E-02
Cell Radius / mm

Fig. 4

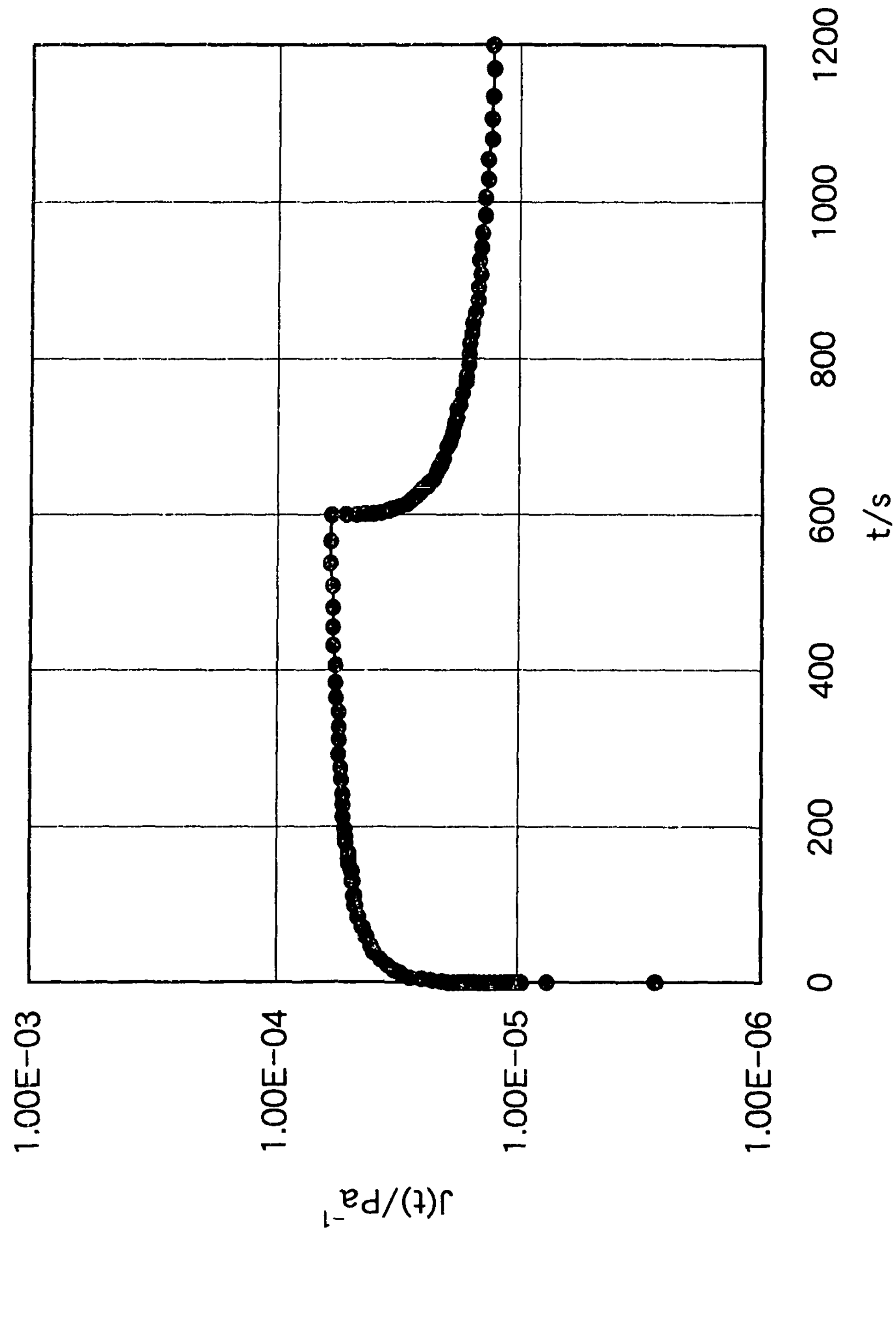
1.00E-03
1.00E-04
1.00E-05
1.00E-06
J(t)/Pa-1
0
200
400
600
800
1000
1200
t/s

*Fig. 5*

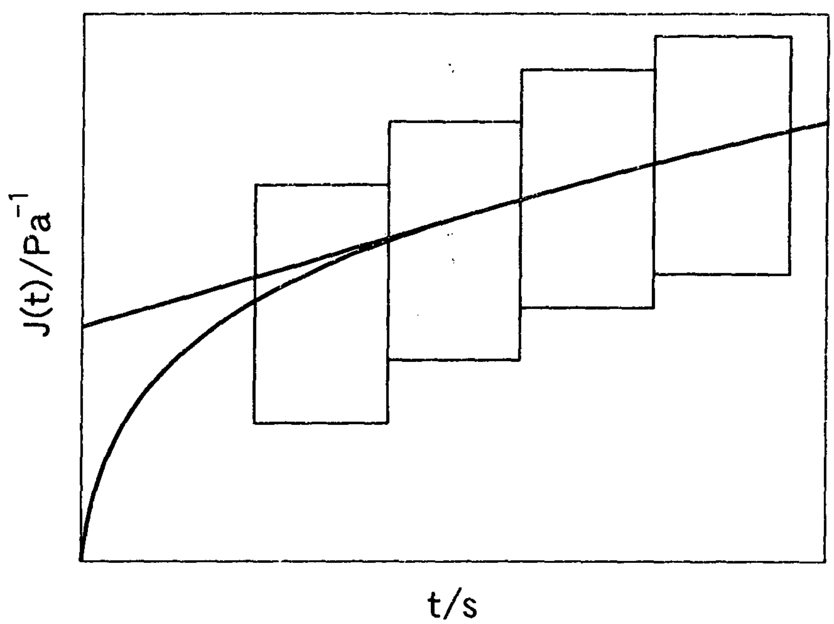


*Fig. 6*

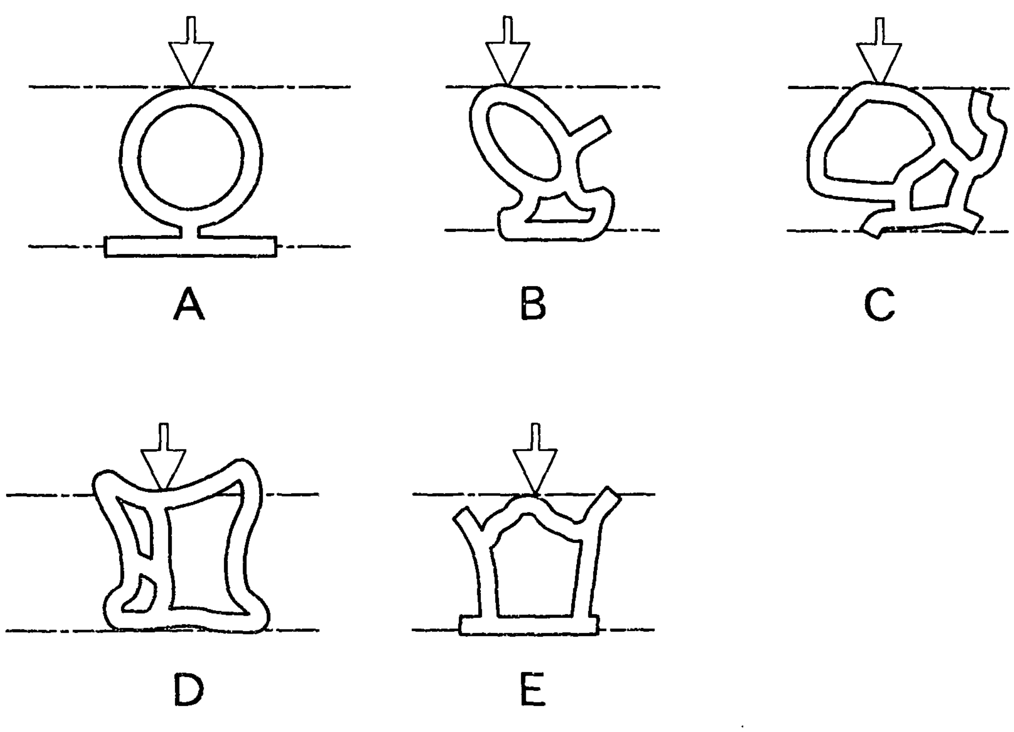

*Fig. 7*

(a)

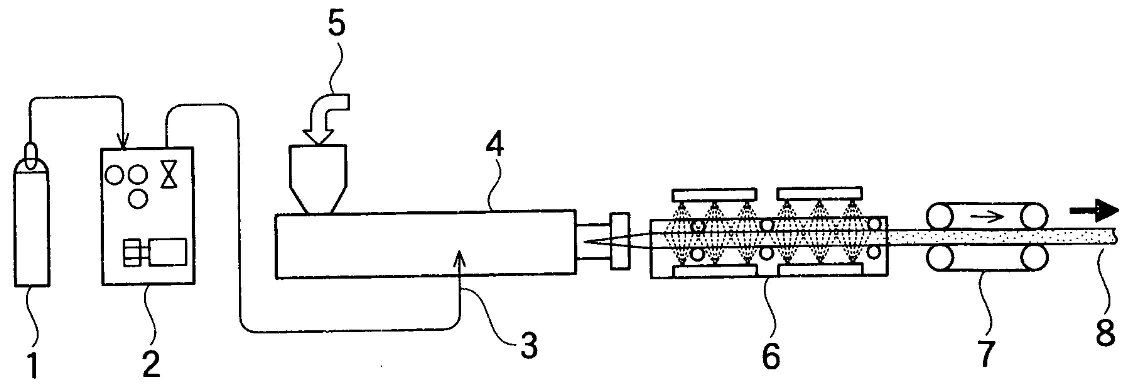


(b)

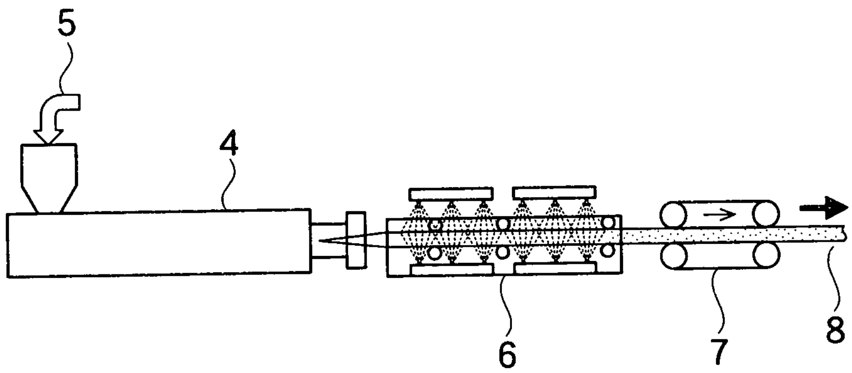


*Fig. 8*

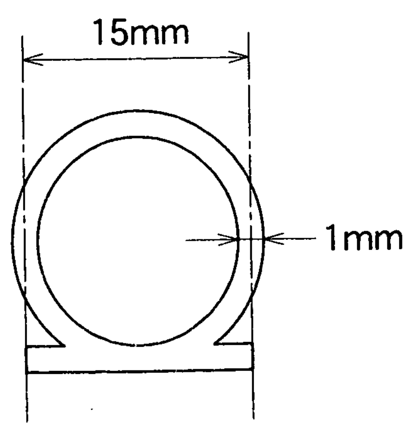

# INTERNATIONAL SEARCH REPORT

International application No.
PCT/JP03/06681

A. CLASSIFICATION OF SUBJECT MATTER
Int.Cl$^7$ C08J9/04

According to International Patent Classification (IPC) or to both national classification and IPC

B. FIELDS SEARCHED

Minimum documentation searched (classification system followed by classification symbols)
Int.Cl$^7$ C08J9/04, C08L23/00-23/26

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-316538 A (Nitto Denko Corp.), 16 November, 2001 (16.11.01), Full text (Family: none) | 1,3,13 |
| A | JP 2001-31802 A (Mitsui Chemicals, Inc.), 06 February, 2001 (06.02.01), Full text & WO 00/55251 A1 & EP 1088855 A | 1-13 |
| A | JP 2002-121309 A (Kyowa Leather Cloth Co., Ltd.), 23 April, 2002 (23.04.02), Full text (Family: none) | 1-13 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 July, 2003 (23.07.03) | 05 August, 2003 (05.08.03) |
| Name and mailing address of the ISA/ Japanese Patent Office | Authorized officer |
| Facsimile No. | Telephone No. |

Form PCT/ISA/210 (second sheet) (July 1998)

## INTERNATIONAL SEARCH REPORT

International application No. PCT/JP03/06681

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-279027 A (Mitsui Chemicals, Inc.), 10 October, 2001 (10.10.01), Full text (Family: none) | 1-13 |
| X | JP 2002-80627 A (Sumitomo Chemical Co., Ltd.), 19 March, 2002 (19.03.02), Full text (Family: none) | 1,3,13 |

Form PCT/ISA/210 (continuation of second sheet) (July 1998)